(19) Europäisches Patentamt
European Patent Office
Office européen des brevets

(11) **EP 3 933 440 B1**

(12) **EUROPEAN PATENT SPECIFICATION**

(45) Date of publication and mention
of the grant of the patent:
**08.04.2026 Bulletin 2026/15**

(21) Application number: **19916904.6**

(22) Date of filing: **26.02.2019**

(51) International Patent Classification (IPC):
**G01S 17/10** (2020.01)      **G01S 17/26** (2020.01)

(52) Cooperative Patent Classification (CPC):
**G01S 17/26**

(86) International application number:
**PCT/JP2019/007235**

(87) International publication number:
**WO 2020/174567 (03.09.2020 Gazette 2020/36)**

(54) **DISTANCE MEASUREMENT DEVICE AND DISTANCE MEASUREMENT METHOD**

DISTANZMESSVORRICHTUNG UND DISTANZMESSVERFAHREN

DISPOSITIF DE MESURE DE DISTANCE ET PROCÉDÉ DE MESURE DE DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.01.2022 Bulletin 2022/01**

(73) Proprietor: **NEC Corporation
108-8001 Tokyo (JP)**

(72) Inventor: **NOGUCHI Hidemi
Tokyo 108-8001 (JP)**

(74) Representative: **Vossius & Partner
Patentanwälte Rechtsanwälte mbB
Siebertstraße 3
81675 München (DE)**

(56) References cited:
JP-A- 2002 139 565      JP-A- 2008 249 541
JP-A- 2010 145 346      JP-A- 2012 052 920
JP-A- 2013 088 313      JP-A- 2016 148 634
US-A1- 2017 329 010    US-A1- 2018 224 547

• O'CONNOR SHAWN ET AL: "Waveform design
considerations for modulated pulse lidar",
PROCEEDINGS OF SPIE, IEEE, US, vol. 9111, 23
May 2014 (2014-05-23), pages 91110P - 91110P,
XP060037678, ISBN: 978-1-62841-730-2, DOI:
10.1117/12.2050395

## Description

## Technical Field

The present invention relates to a distance-measurement apparatus and a distance-measurement method, and in particular to a distance-measurement apparatus and a distance-measurement method for measuring a distance by transmitting a pulse and receiving its reflection.

## Background Art

As a method for measuring a distance to a distance-measurement-target object, i.e., an object to which a distance is to be measured, there is a time-of-flight (Time of Flight; ToF) method. In the ToF method, a distance to a distance-measurement-target object, i.e., an object to which a distance is to be measured, is calculated by emitting a modulated optical pulse toward the distance-measurement-target object and receiving a reflection of the modulated optical pulse coming from the distance-measurement-target object. Note that the optical pulse may be periodically and repeatedly transmitted.

In relation to this technique, Patent Literature 1 discloses a method for providing distance information of a scene by using a time-of-flight sensor or a time-of-flight camera. The method disclosed in Patent Literature 1 includes: emitting a periodic optical signal toward a scene according to a modulation signal based on a clock timing having a reference frequency spread by periodic perturbation having a certain perturbation frequency and a certain perturbation period; receiving a reflection of the periodic optical signal from the scene; evaluating, for the received reflection of the periodic optical signal, time-of-flight information over a set of a plurality of measurement durations according to the modulation signal; and deriving distance information from the time-of-flight information for the received reflection. Note that each measurement duration included in the set is an integer multiple or a half integer multiple of the perturbation period, and the average of the reference frequencies is kept constant over the whole set of measurement durations.

Patent Literature 2 relates to Doppler correction of phase-encoded LIDAR. Patent Literature 3 relates to methods and apparatus for lidar operation with pulse position modulation. Literature 4 relates to waveform design considerations for modulated pulse Lidar in turbid water environment.

## Citation List

Patent Literature 1: WO 2013/010913 A1
Patent Literature 2: US 2018/224547 A1
Patent Literature 3: US 2017/0329010 A1
Literature 4: O'Connor Shawn et al., "Waveform design considerations for modulated pulse lidar", Proc. SPIE 9111, 5 June 2014

## Summary of Invention

## Technical Problem

When a distance to a distance-measurement-target object is long or the transmission period of repeatedly transmitted transmission pulses is short, in some cases, the time from when an optical pulse is transmitted to when reflected light of the optical pulse is received becomes longer than the transmission period of transmission pulses. In such a case, there is a possibility that it is impossible to determine which transmission pulse the received light, i.e., the reflected light corresponds to, and hence impossible to determine at which timing the transmission pulse was transmitted. In other words, there is a possibility that it is impossible to associate the received reflected light with the transmission pulse. In such a case, there is a possibility that it is impossible to properly measure the distance. Note that, in the technique disclosed in Patent Literature 1, the reflected light is not associated with the emitted optical signal. Therefore, there is a possibility that it is impossible to properly measure a distance in the technique disclosed in Patent Literature 1.

The present disclosure has been made to solve the above-described problems and an object thereof is to provide a distance-measurement apparatus and a distance-measurement method capable of properly measuring a distance to a distance-measurement-target object irrespective of the distance thereto or the transmission period of transmission pulses.

## Solution to Problem

A distance-measurement apparatus according to the present disclosure includes: generation means for generating a plurality of transmission pulses of which a strength of an optical signal changes in a pulse-like manner, each pulse being divided into a plurality of regions, the plurality of transmission pulses being formed so that phases in respective regions of a transmission pulse can be different from each other, and being formed so that a phase difference between the phases in the plurality of respective regions of the transmission pulse is changed according to a transmission order of the transmission pulses; transmission means for repeatedly transmitting the generated transmission pulses; reception means for receiving reflected pulses of the transmission pulses reflected on a distance-measurement-target object; detection means for detecting a phase difference between phases in a plurality of respective regions of the received reflected pulse; and distance calculation means for calculating a distance to the distance-measurement-target object based on a receiving timing of the received reflected pulse and a transmitting timing of the transmission pulse corresponding to the phase difference detected from the reflected pulse.

Further, a distance-measurement method according to the present disclosure includes: generating a plurality of transmission pulses of which a strength of an optical signal changes in a pulse-like manner, each pulse being divided into a plurality of regions, the plurality of transmission pulses being formed so that phases in respective regions of a transmission pulse can be different from each other, and being formed so that a phase difference between the phases in the plurality of respective regions of the transmission pulse is changed according to a transmission order of the transmission pulses; repeatedly transmitting the generated transmission pulses; receiving reflected pulses of the transmission pulses reflected on a distance-measurement-target object; detecting a phase difference between phases in a plurality of respective regions of the received reflected pulse; and calculating a distance to the distance-measurement-target object based on a receiving timing of the received reflected pulse and a transmitting timing of the transmission pulse corresponding to the phase difference detected from the reflected pulse.

**Advantageous Effects of Invention**

According to the present disclosure, it is possible to provide a distance-measurement apparatus and a distance-measurement method capable of properly measuring a distance to a distance-measurement-target object irrespective of the distance thereto or the transmission period of transmission pulses.

**Brief Description of Drawings**

Fig. 1 schematically shows a distance-measurement apparatus according to an example embodiment of the present disclosure;
Fig. 2 schematically shows a distance-measurement method performed by a distance-measurement apparatus according to an example embodiment of the present disclosure;
Fig. 3 is a diagram for explaining an outline of a method for calculating a distance to a distance-measurement-target object by using pulses;
Fig. 4 shows a configuration of a distance-measurement apparatus according to a first example embodiment;
Fig. 5 is a diagram for explaining operations performed by an optical modulator according to the first example embodiment;
Fig. 6 shows an example of a phase difference table according to the first example embodiment;
Fig. 7 is a flowchart showing a distance-measurement method performed by the distance-measurement apparatus according to the first example embodiment;
Fig. 8 is a timing chart showing a relation between transmission pulses and reflected pulses according to a comparative example;
Fig. 9 is a timing chart showing a relation between transmission pulses and reflected pulses according to a comparative example;
Fig. 10 is a timing chart showing a relation between transmission pulses and reflected pulses according to the first example embodiment;
Fig. 11 is a timing chart for explaining operations performed by an optical modulator according to a second example embodiment; and
Fig. 12 shows an example of a phase difference table according to the second example embodiment.

**Description of Embodiments**

(Overview of Example Embodiment according to Present Disclosure)

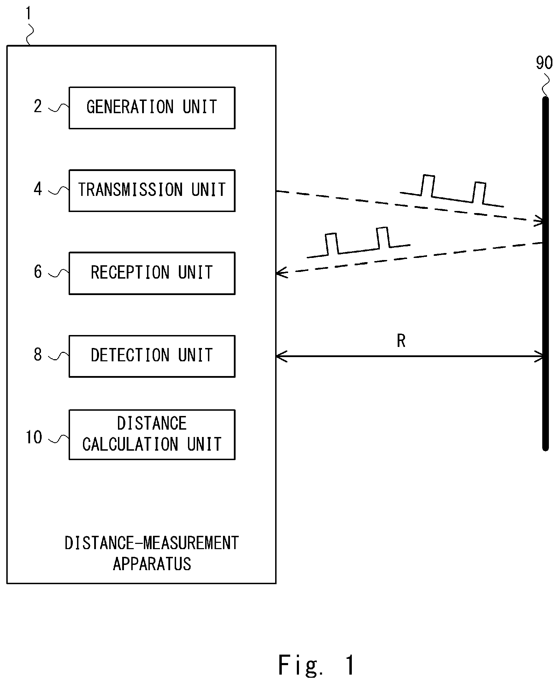

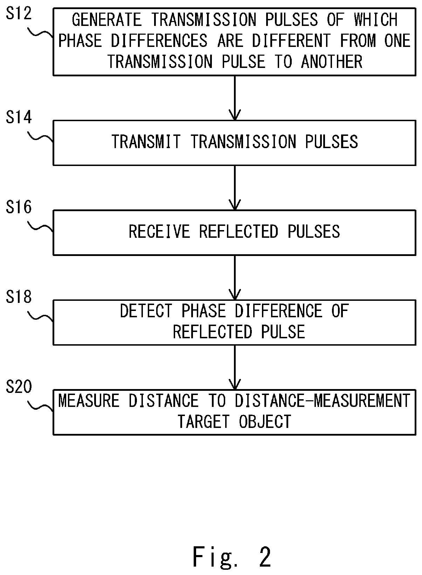

Prior to describing an example embodiment according to the present disclosure, an overview of the example embodiment according to the present disclosure will be described. Fig. 1 schematically shows a distance-measurement apparatus 1 according to an example embodiment in accordance with the present disclosure. Further, Fig. 2 shows an outline of a distance-measurement method performed by the distance-measurement apparatus 1 according to the example embodiment in accordance with the present disclosure.

The distance-measurement apparatus 1 includes a generation unit 2 that functions as generation means, a transmission unit 4 that functions as transmission means, a reception unit 6 that functions as reception means, a detection unit 8 that functions as detection means, and a distance calculation unit 10 that functions as distance calculation means. The generation unit 2 generates a plurality of transmission pulses of which the strength of an optical signal changes in a pulse-like manner. When doing so, the generation unit 2 generates a plurality of transmission pulses which are formed so that phases in a plurality of respective regions of the transmission pulse can be different from each other, and are formed so that the phase difference between the phases in the plurality of respective regions of the transmission pulse is changed according to the transmission order of the transmission pulses. That is, the generation unit 2 generates a plurality of transmission pulses of which phase differences are different from one transmission pulse to another (Step S12).

The transmission unit 4 repeatedly transmits generated transmission pulses (Step S14). The reception unit 6 receives reflected pulses of the transmission pulses reflected on a distance-measurement-target object 90 (step S16). The detection unit 8 detects a phase difference between phases in a plurality of respective regions of the received reflected pulse (Step S18). The distance calculation unit 10 calculates a distance to the distance-measurement-target object 90 based on the receiving timing of the received reflected pulse and the transmitting timing of the transmission pulse corresponding to the phase difference detected from the reflected pulse (Step S20).

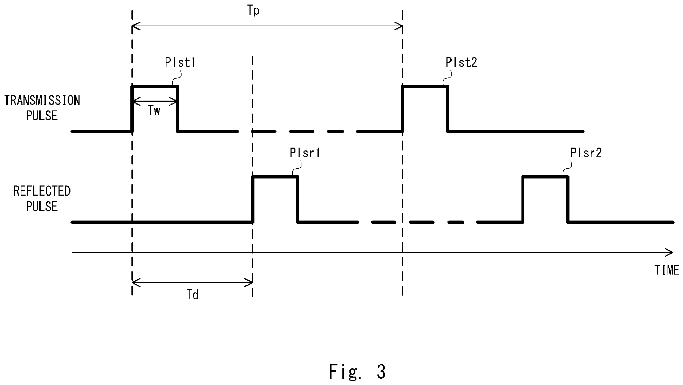

Fig. 3 is a diagram for explaining an outline of a method for calculating a distance to a distance-measurement-target object 90 by using pulses. Fig. 3 shows the principle of operations according to a ToF method. By the transmission unit 4, transmission pulses PlstA and PlstB are transmitted at a transmission period (a pulse period) Tp. Note that a pulse width, i.e., a width of each transmission pulse is represented by Tw. Then, when the transmission pulse PlstA is reflected on the distance-measurement-target object 90, a reflected pulse PlsrA, which is reflected light of the transmission pulse PlstA, is received by the reception unit 6. Further, when the transmission pulse PlstB is reflected on the distance-measurement-target object 90, a reflected pulse PlsrB, which is reflected light of the transmission pulse PlstB, is received by the reception unit 6. Note that the transmission period (the pulse period) Tp does not have to be constant.

Further, a time difference between a time at which the transmission pulse PlstA is transmitted and a time at which the reflected pulse PlsrA is received, i.e., the flight time of the light (the pulse) is represented by Td. Further, the speed of light is represented by c. In this case, the distance R to the distance-measurement-target object 90 is expressed by the below-shown Expression 1.

$$(\text{Expression 1}) \quad R = c \times Td/2$$

In this way, the distance R is calculated by the distance calculation unit 10.

In the example shown in Fig. 3, the two transmission pulses PlstA and PlstB are transmitted at the pulse period Tp, and the reflected pulses PlsrA and PlsrB, which are the reflected light of the transmission pulses PlstA and PlstB, respectively, are received. Note that when the distance to the distance-measurement-target object 90 is long, in some cases, the time difference Td becomes longer than the pulse period Tp. Further, even when the pulse period Tp is short, in some cases, the time difference Td becomes longer than the pulse period Tp. That is, depending on the distance to the distance-measurement-target object 90 or the pulse period, the relation Td > Tp holds. In such a case, the next transmission pulse PlstB is transmitted before the reflected pulse PlsrA is received. In this case, if it is impossible to determine whether the received reflected pulse PlsrA is the reflected light of the transmission pulse PlstA or the reflected light of the transmission pulse PlstB, there is a possibility that the distance cannot be properly measured. That is, if the distance is measured from the time difference between the transmitting time of the transmission pulse PlstB and the receiving time of the reflected pulse PlsrA, a distance shorter than the actual distance to the distance-measurement-target object 90 is calculated.

In contrast to this, the distance-measurement apparatus 1 according to this example embodiment is configured to generate transmission pulses which are formed so that phase differences in a plurality of regions of the transmission pulse are changed according to the transmission order of the transmission pulses. For example, the distance-measurement apparatus 1 according to this example embodiment generates a transmission pulse Plst1 having a phase difference $\Delta\varphi1$, and generates a transmission pulse Plst2 having a phase difference $\Delta\varphi2$. Further, the distance-measurement apparatus 1 according to this example embodiment is configured to detect a phase difference of a received reflected pulse Plsr1, and associate the transmission pulse Plst1 with the reflected pulse Plsrl. Therefore, the distance-measurement apparatus 1 and the distance-measurement method according to this example embodiment can properly measure a distance to a distance-measurement-target object irrespective of the distance thereto or the transmission period of transmission pulses.

(First Example Embodiment)

Next, a first example embodiment will be described.

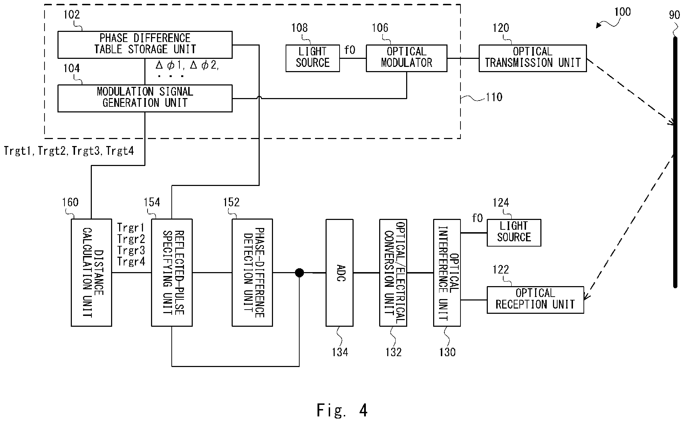

Fig. 4 shows a configuration of a distance-measurement apparatus 100 according to the first example embodiment. A distance-measurement apparatus 100 according to the first example embodiment includes, as a transmitting-side module, a phase difference table storage unit 102, a modulation signal generation unit 104, an optical modulator 106, a light source 108, and an optical transmission unit 120. The phase difference table storage unit 102, the modulation signal generation unit 104, the optical modulator 106, and the light source 108 constitute a pulse generation unit 110 that generates transmission pulses having different phase differences according to the transmission order thereof. This pulse generation unit 110 corresponds to the generation unit 2 shown in Fig. 1. Further, the optical transmission unit 120 corresponds to the transmission unit 4 shown in Fig. 1.

Further, the distance-measurement apparatus 100 according to the first example embodiment includes, as a receiving-side module, an optical reception unit 122, a light source 124, an optical interference unit 130, an optical/electrical conversion unit 132, and an AD converter 134. The optical reception unit 122 corresponds to the reception unit 6 shown in Fig. 1. Further, the distance-measurement apparatus 100 according to the first example embodiment includes a phase-difference detection unit 152, a reflected-pulse specifying unit 154, and a distance calculation unit 160. The phase-difference detection unit 152 corresponds to the detection unit 8 shown in Fig. 1. Further, the distance calculation unit 160 corresponds to the distance calculation unit 10 shown in Fig. 1.

Here, in the first example embodiment, it is assumed that a transmission pulse is divided into two regions, i.e., into a first half and a second half. Further, it is assumed that the phases of the optical signal in the two regions, i.e., the first-half and second-half regions of the transmission pulse can be different from each other. In other words, it is assumed that the phases in the first and second halves of the transmission pulse can be different from each other. According to the invention, the phase difference, i.e., the difference between these phases is changed according to the transmission order of the transmission pulses. Note that, in the following description, the first-half region of a transmission pulse (a modulation signal and a reflected pulse) may be referred to as a region #1, and the second-half region thereof may be referred to as a region #2. Note that the expression "the phases in the first and second halves of a transmission pulse can be different from each other" means that there may be cases in which the phases in the first and second halves are the same as each other. In such cases, the phase difference is zero degrees.

Note that each of the above-described components can be implemented by some kind of a device or a circuit such as an arithmetic circuit or the like. The arithmetic circuit is, for example, an FPGA (Field-Programmable Gate Array) or the like. The same applies to the other example embodiments.

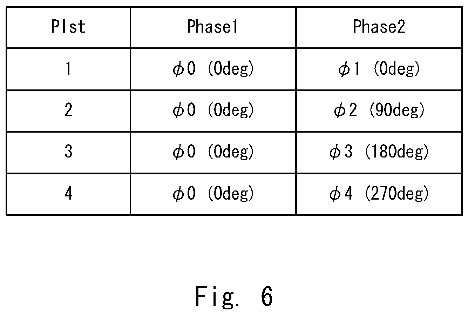

The phase difference table storage unit 102 stores a phase difference table. The phase difference table is a lookup table in which the transmission order of transmission pulses is associated with phase differences in the transmission pulses. For example, in the phase difference table, a phase difference in a first transmission pulse may be represented by $\Delta\varphi1$ and a phase difference in a second transmission pulse may be represented by $\Delta\varphi2$. Further, as shown in Fig. 6 (which will be described later), in the phase difference table, the order of transmission pulses may be associated with phases in respective regions. In this way, in the phase difference table, the transmission order of transmission pulses is associated with phase differences in the transmission pulses.

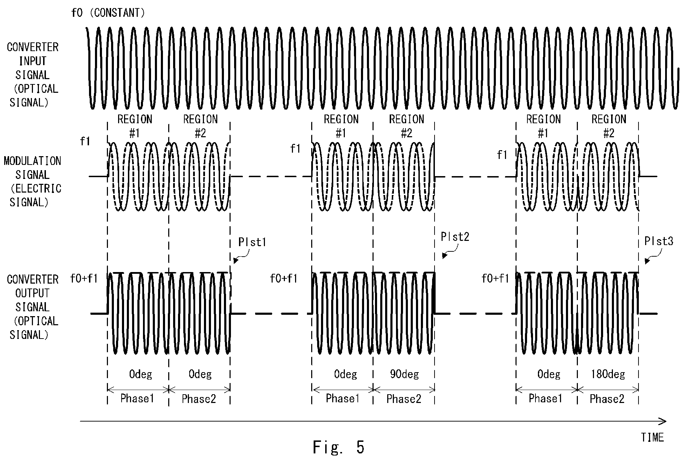

The modulation signal generation unit 104 generates a modulation signal for generating transmission pulses by using the phase difference table stored in the phase difference table storage unit 102. Note that, as shown in Fig. 5 (which will be described later), the modulation signal is an electric signal that corresponds to a frequency offset f1 and has a waveform formed with a phase (a phase difference) specified in the phase difference table. The modulation signal generation unit 104 outputs the generated modulation signal to the optical modulator 106.

Further, the modulation signal generation unit 104 outputs a measurement start trigger Trgt to the distance calculation unit 160 at a timing at which a transmission pulse corresponding to the frequency offset f1 is transmitted. Note that the measurement start trigger Trgt indicates the transmitting timing of each of successively-transmitted transmission pulses (Plst1, Plst2, · · · ). In the first example embodiment, the modulation signal generation unit 104 outputs a measurement start trigger Trgt1 to the distance calculation unit 160 at a timing at which a modulation signal corresponding to the phase difference $\Delta\varphi1$ is output. Further, the modulation signal generation unit 104 outputs a measurement start trigger Trgt2 to the distance calculation unit 160 at a timing at which a modulation signal corresponding to the phase difference $\Delta\varphi2$ is output. Similarly and subsequently, the modulation signal generation unit 104 outputs a measurement start trigger Trgtn to the distance calculation unit 160 at a timing at which a modulation signal corresponding to a phase difference $\Delta\varphi n$ is output.

The light source 108 generates an optical signal having a reference frequency f0 as shown in Fig. 5 (which will be described later). The optical signal is input to the optical modulator 106. The optical modulator 106 generates a plurality of transmission pulses having phase differences $\Delta\varphi1$, $\Delta\varphi2$, · · · , $\Delta\varphi n$ different from each other by using the modulation signal received from the modulation signal generation unit 104 and the optical signal (a modulator input signal) received from the light source 108. The optical modulator 106 outputs an optical signal including the generated transmission pulses to the optical transmission unit 120.

For example, the optical modulator 106 may be implemented by using an I/Q (In Phase/Quadrature Phase) optical modulator in which two Mach-Zehnder modulators are combined. The optical modulator 106 modulates, in each I/Q signal, the optical signal (the modulator input signal) by using two modulation signals (an I signal and a Q signal) having phases different from each other by 90 degrees. In this way, the optical modulator 106 generates a plurality of transmission pulses of which phase differences are different from one transmission pulse to another based on the frequency of the modulation signal and the phase state thereof.

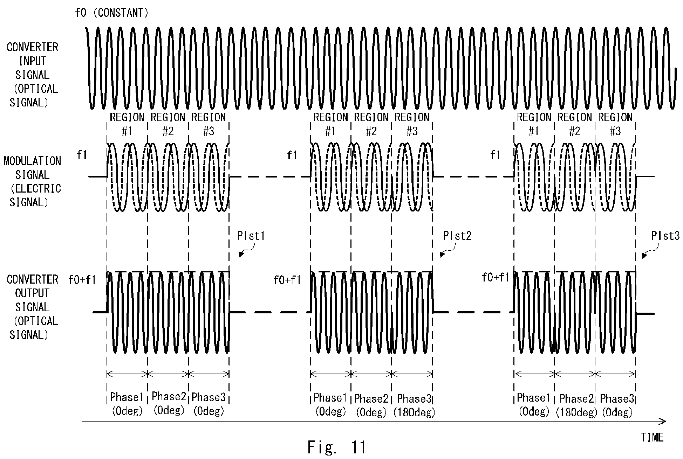

Fig. 5 is a diagram for explaining operations performed by the optical modulator 106 according to the first example embodiment. Further, Fig. 6 shows an example of the phase difference table according to the first example embodiment. In Fig. 5, three transmission pulses are shown as an example. As shown in Fig. 5, the optical signal (the modulator input signal) input to the optical modulator 106 is an optical signal having a constant frequency f0. Further, it is assumed that each of the I signal and the Q signal, which serve as the modulation signal, has a pulse-like waveform having a frequency f1, and that the Q signal is a signal whose phase is delayed from that of the I signal by 90 degrees. Note that the amplitude of the modulation signal is 0V except for these pulse-like waveforms. Further, regarding the pulse-like waveform of the modulation signal having the frequency f1, in each transmission pulse, the phases in the region #1 and the region #2 (in the first and second halves) can be different from each other. Further, the phase difference between these phases in the region #1 and the region #2 is different from one transmission pulse to another. Note that, as a matter of fact, the frequency of light is very high. For example, the frequency of light having wavelength of 1.55 μm is about 193 THz. Therefore, it is difficult to accurately depict such light as a wave. Accordingly, in Fig. 5, an optical signal is schematically shown as a sine wave having a long period for the sake of convenience so that the frequency of the light can be easily imaged. Therefore, in Fig. 5, the waveforms of the modulator input signal, the modulation signal, and the modulator output signal do not necessarily correspond to the frequencies of the respective signals. The same applies to Fig. 11 (which will be described later).

Note that the optical modulator 106 modulates the optical signal according to the pulse-like waveform of the modulation signal, and outputs the modulated optical signal (a modulator output signal). This modulator output signal corresponds to the transmission pulse. Note that, as shown in the example in Fig. 6, in the first example embodiment, the phase in the region #1 of each transmission pulse is $\varphi 0$ ($\varphi 0 = 0$ deg). Further, the phase in the region #2 of the first pulse Plst1 is $\varphi 1$ ($\varphi 1 = 0$ deg). Further, the phase in the region #2 of the second pulse Plst2 is $\varphi 2$ ($\varphi 2 = 90$ deg). Further, the phase in the region #2 of the third pulse Plst3 is $\varphi 3$ ($\varphi 3 = 180$ deg). Further, the phase in the region #2 of the fourth pulse Plst4 is $\varphi 4$ ($\varphi 4 = 270$ deg). That is, in the first example embodiment, the phases in the regions #2 of transmission pulses are different from each other. In this way, phase differences are provided in such a manner that each transmission pulse has a different phase difference.

As shown in the example in Figs. 5 and 6, in the first pulse Plst1, the phase in the region #1 is 0 degrees and the phase $\varphi 1$ in the region #2 is 0 degrees. Therefore, the modulation signal generation unit 104 generates, as the I signal, a modulation signal in which the phase in the region #1 is 0 degrees and the phase $\varphi 1$ in the region #2 is 0 degrees, and generates, as the Q signal, a modulation signal whose phase is delayed from that of the I signal by 90 degrees. When the optical modulator 106 receives these I and Q signals, it shifts the optical signal having the frequency f0 by a frequency f1, modulates the optical signal so that the phases in the regions #1 and #2 become the same as each other, i.e., the phases become 0 degrees, and by doing so, outputs a pulse having a frequency f0+f1. As a result, a transmission pulse Plst1 in which the phase in the region #1 is 0 degrees (Phase 1 = 0) and the phase in the region #2 is 0 degrees (Phase 2 = 0) is generated. Note that the phase difference $\Delta\varphi 1$ (= $\varphi 1$-$\varphi 0$) in the transmission pulse Plst1 is 0 degrees.

Further, as shown in the example in Figs. 5 and 6, in the second pulse Plst2, the phase in the region #1 is 0 degrees and the phase $\varphi 2$ in the region #2 is 90 degrees. Therefore, the modulation signal generation unit 104 generates, as the I signal, a modulation signal in which the phase in the region #1 is 0 degrees and the phase $\varphi 2$ in the region #2 is 90 degrees, and generates, as the Q signal, a modulation signal whose phase is delayed from that of the I signal by 90 degrees. When the optical modulator 106 receives these I and Q signals, it shifts the optical signal having the frequency f0 by the frequency f1, modulates the optical signal so that the phase in the region #1 becomes 0 degrees and the phase in the region #2 becomes 90 degrees, and by doing so, outputs a pulse having the frequency f0+f1. As a result, a transmission pulse Plst2 in which the phase in the region #1 is 0 degrees (Phase 1 = 0) and the phase in the region #2 is 90 degrees (Phase 2 = 90) is generated. Note that the phase difference $\Delta\varphi 2$ (= $\varphi 2$-$\varphi 0$) in the transmission pulse Plst2 is 90 degrees.

Further, as shown in the example in Figs. 5 and 6, in the third pulse Plst3, the phase in the region #1 is 0 degrees and the phase $\varphi 3$ in the region #2 is 180 degrees. Therefore, the modulation signal generation unit 104 generates, as the I signal, a modulation signal in which the phase in the region #1 is 0 degrees and the phase $\varphi 3$ in the region #2 is 180 degrees, and generates, as the Q signal, a modulation signal whose phase is delayed from that of the I signal by 90 degrees. When the optical modulator 106 receives these I and Q signals, it shifts the optical signal having the frequency f0 by a frequency f1, modulates the optical signal so that the phase in the region #1 becomes 0 degrees and the phase in the region #2 becomes 180 degrees, and by doing so, outputs a pulse having the frequency f0+f1. As a result, a transmission pulse Plst3 in which the phase in the region #1 is 0 degrees (Phase 1 = 0) and the phase in the region #2 is 180 degrees (Phase 2 = 180) is generated. Note that the phase difference $\Delta\varphi 3$ (= $\varphi 3$-$\varphi 0$) in the transmission pulse Plst3 is 180 degrees. Note that although it is not shown in Fig. 5, a transmission pulse Plst4 having a phase difference $\Delta\varphi 4$ (= $\varphi 4$-$\varphi 0$), i.e., a phase difference of 270 degrees is generated in a manner similar to the above-described manner.

As described above, the transmission pulse indicates a signal of which the optical strength changes in a pulse-like manner. Further, the transmission pulses Plst1, Plst2, Plst3, and Plst4 have phase differences $\Delta\varphi 1$, $\Delta\varphi 2$, $\Delta\varphi 3$, and $\Delta\varphi 4$, respectively, that are different from each other. Not that broken lines in the modulator output signal indicates the optical strength (the envelope).

Note that the modulation signal generation unit 104 may output the measurement start trigger Trgt1 to the distance calculation unit 160 at a timing at which the modulation signal having the pulse-like waveform having the phase difference $\Delta\varphi 1$ is output. The modulation signal generation unit 104 may output the measurement start trigger Trgt2 to the distance calculation unit 160 at a timing at which the modulation signal having the pulse-like waveform having the phase difference $\Delta\varphi 2$ is output. The modulation signal generation unit 104 may output the measurement start trigger Trgt3 to the distance calculation unit 160 at a timing at which the modulation signal having the pulse-like waveform having the phase difference $\Delta\varphi 3$ is output. The modulation signal generation unit 104 may output the measurement start trigger Trgt4 to the distance calculation unit 160 at a timing at which the modulation signal having the pulse-like waveform having the phase difference $\Delta\varphi4$ is output.

The optical transmission unit 120 transmits (emits) an optical signal including a plurality of transmission pulses (Plst1, Plst2, Plst3 and Plst4) to a distance-measurement-target object 90. The transmission pulses are reflected on the distance-measurement-target object 90 and travel toward the distance-measurement apparatus 100. The optical reception unit 122 receives an optical signal including a plurality of reflected pulses reflected on the distance-measurement-target object 90. Note that the frequency of each of the plurality of received reflected pulses is a frequency f0+f1. Note that the plurality of transmission pulses do not necessarily have to be applied to the same distance-measurement-target object 90. Therefore, the flight time for a round trip of the transmission pulse Plst1 and that of the transmission pulse Plst2 may be different from each other.

Further, since the plurality of transmission pulses have phase differences different from one transmission pulse to another, a plurality of received reflected pulses are formed in such a manner that phase differences in a plurality of regions of the received reflected pulses are different from one received reflected pulse to another. Note that since phase noises in the light source 108 on the transmitting side and the light source 124 on the receiving side, and phase noises that are caused during the round trip of the optical signal could be superimposed, the phase in each region of the received reflected pulse could be different from the phase in the respective region of the transmission pulse. However, since the temporal variations of these phase noises are sufficiently longer than the time corresponding to the width of one pulse and the noises that are superimposed in one pulse are considered to be constant, the phase difference in a given reflected pulse may be substantially the same as the phase difference $\Delta\varphi$ of the corresponding transmission pulse. In other words, even if the phase noises are superimposed, the information about phase differences in a plurality of regions of a reflected pulse is maintained.

The optical interference unit 130 detects a frequency offset of the reflected pulse (the received light) by using an optical signal having the frequency f0 received from the light source 124 as reference light. Specifically, the optical interference unit 130 performs a heterodyne receiving operation by making the reference light received from the light source 124 interfere with the received light and detecting the beat frequency. In this way, because the frequency of the light source 124 is f0, which is the same as that of the light source 108 on the transmitting side, the optical interference unit 130 can detect the frequency offset of the reflected pulse and restore the modulation signal used on the transmitting side. For example, the optical interference unit 130 may be a mixer using an optical coupler. The optical interference unit 130 outputs an optical signal having a frequency f1 corresponding to the frequency offset to the optical/electrical conversion unit 132. Alternatively, instead of using the light source 124, light that is obtained by branching (i.e., separating) part of the light emitted from the light source 108 on the transmitting side may be used as the reference light on the receiving side. By using the reference light that is obtained by branching (i.e., separating) part of the light emitted from the light source 108, the accuracy of the frequency in the transmission and the reception is maintained, making it possible to accurately restore the modulation signal.

The optical/electrical conversion unit 132 converts the optical signal received from the optical interference unit 130 into an electric signal. The optical/electrical conversion unit 132 may be, for example, an optical/electrical converter using a photodetector or a balanced optical receiver using two photodetectors. The AD converter 134 converts the electric signal, which is an analog signal converted by the optical/electrical conversion unit 132, into a digital signal. The electric signal indicating the frequency f1, which has been obtained as the AD converter 134 has converted the analog signal into the digital signal, is output to the phase-difference detection unit 152 and the reflected-pulse specifying unit 154.

The phase-difference detection unit 152 detects a phase difference in the electric signal which indicates the frequency f1 and corresponds to the reflected pulse. Specifically, the phase-difference detection unit 152 calculates a phase in each of the regions in the electric signal indicating the frequency f1, which corresponds to a respective one of the regions in the transmission pulse. The phases in the regions in the transmission pulse can be different from each other. In the first example embodiment, since the phase in the region #1 (the first half) of the transmission pulse can be different from that in the region #2 (the second half), the phase-difference detection unit 152 calculates a phase in each of the first-half region (the region #1) and the second-half region (the region #2) of the electric signal corresponding to the reflected pulse. Then, the phase-difference detection unit 152 calculates the difference between the phase in the region #1 and that in the region #2, and thereby detects the phase difference $\Delta\varphi$ of the corresponding reflected pulse. The phase-difference detection unit 152 outputs the detected phase difference $\Delta\varphi$ to the reflected-pulse specifying unit 154. Note that the phase-difference detection unit 152 may be formed by a phase detector, a phase comparator, or the like, but it is not limited such examples.

The reflected-pulse specifying unit 154 specifies a transmission pulse Plst corresponding to the phase difference $\Delta\varphi$ detected from the reflected pulse by using the phase difference table stored in the phase difference table storage unit 102. In this way, the reflected-pulse specifying unit 154 associates the reflected pulse Plsr with the transmission pulse Plst. Further, the reflected-pulse specifying unit 154 extracts the receiving timing of the reflected pulse having the detected phase difference $\Delta\varphi$. The reflected-pulse specifying unit 154 outputs a measurement stop trigger Trgr corresponding to the specified transmission pulse Plst to the distance calculation unit 160 at the receiving timing of the reflected pulse.

For example, when the phase difference $\Delta\varphi1$ is specified, the phase-difference detection unit 152 determines that the reflected pulse corresponding to this phase difference $\Delta\varphi1$ corresponds to the transmission pulse Plst1. Then, the phase-difference detection unit 152 outputs a measurement stop trigger Trgr1 corresponding to the transmission pulse Plst1 to the distance calculation unit 160 at the receiving timing of the reflected pulse. Similarly, when the phase difference $\Delta\varphi2$ is specified, the phase-difference detection unit 152 outputs a measurement stop trigger Trgr2 corresponding to the transmission pulse Plst2 to the distance calculation unit 160 at the receiving timing of the reflected pulse. Similarly, when the phase difference $\Delta\varphi3$ is specified, the phase-difference detection unit 152 outputs a measurement stop trigger Trgr3 corresponding to the transmission pulse Plst3 to the distance calculation unit 160 at the receiving timing of the reflected pulse. Similarly, when the phase difference $\Delta\varphi4$ is specified, the phase-difference detection unit 152 outputs a measurement stop trigger Trgr4 corresponding to the transmission pulse Plst4 to the distance calculation unit 160 at the receiving timing of the reflected pulse.

The distance calculation unit 160 calculates a distance R to the distance-measurement-target object 90, by using the Expression 1, from the time difference between the output timing of the measurement start trigger Trgt (a first trigger signal) and the output timing of the measurement stop trigger Trgr (a second trigger signal). Note that the distance calculation unit 160 calculates a distance R related to the transmission pulse Plst1 having the phase difference $\Delta\varphi1$ from the time difference between the output timing of the measurement start trigger Trgt1 and the output timing of the measurement stop trigger Trgr1. The distance calculation unit 160 calculates a distance R related to the transmission pulse Plst2 having the phase difference $\Delta\varphi2$ from the time difference between the output timing of the measurement start trigger Trgt2 and the output timing of the measurement stop trigger Trgr2. Similarly, the distance calculation unit 160 calculates a distance R related to a transmission pulse having a phase difference $\Delta\varphi n$ from the time difference between the output timing of a measurement start trigger Trgtn corresponding to an nth transmission pulse and the output timing of a measurement stop trigger Trgrn corresponding thereto.

Note that the phases corresponding to the respective regions of a transmission pulse can be set as appropriate so that the phase difference between these phases can be detected by the phase-difference detection unit 152. Note that the phase difference between regions is preferably made as large as possible in consideration of phase noises in the light source 108 on the transmitting side and the light source 124 on the receiving side, and phase noises that are superimposed during the round trip of the optical signal. For example, the lower limit of the phase difference may be set to 45 degrees.

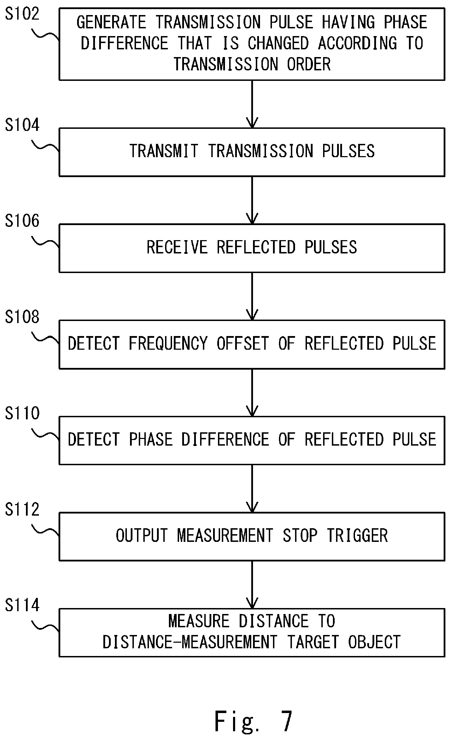

Fig. 7 is a flowchart showing a distance-measurement method performed by the distance-measurement apparatus 100 according to the first example embodiment. As described above, the pulse generation unit 110 generates a transmission pulse having a phase difference $\Delta\varphi$ that is changed according to the transmission order (Step S102). The optical transmission unit 120 transmits (emits) an optical signal including the transmission pulses generated in the process in the step S102 to the distance-measurement-target object 90 (step S104). Specifically, the optical modulator 106 of the pulse generation unit 110 modulates the optical signal (the modulator input signal) by using a modulation signal generated by the modulation signal generation unit 104. In this way, the optical modulator 106 generates a plurality of transmission pulses having phase differences different from each other. Further, through the above-described process, phase differences different from each other are given to the respective transmission pulses. Note that, at the timing of the step S104, the measurement start triggers Trgt corresponding to the respective transmission pulses can be output to the distance calculation unit 160.

The optical reception unit 122 receives an optical signal including reflected pulses (step S106). As described above, the optical interference unit 130 detects the frequency offset of each reflected pulse by using the reference light (step S108). As described above, the phase-difference detection unit 152 detects a phase difference in a received reflected pulse (Step S110). As described above, the reflected-pulse specifying unit 154 specifies a transmission pulse corresponding to the phase difference detected from the reflected pulse, and outputs a measurement stop trigger Trgr corresponding to the specified transmission pulse Plst at the receiving timing of the reflected pulse (Step S112). The distance calculation unit 160 calculates a distance R to the distance-measurement-target object 90 by using the measurement start trigger Trgt and the measurement stop trigger Trgr as described above (step S114).

(Comparison with Comparative Example)

Next, the first example embodiment and a comparative example will be described by using timing charts.

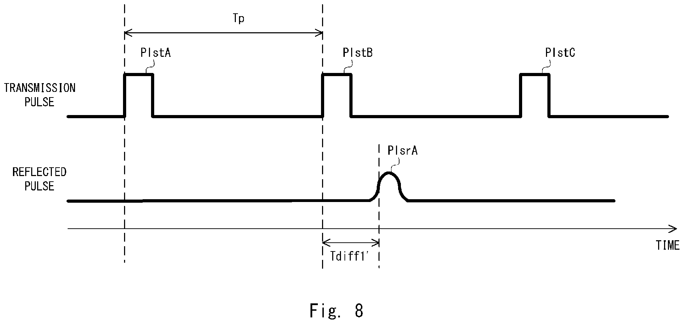

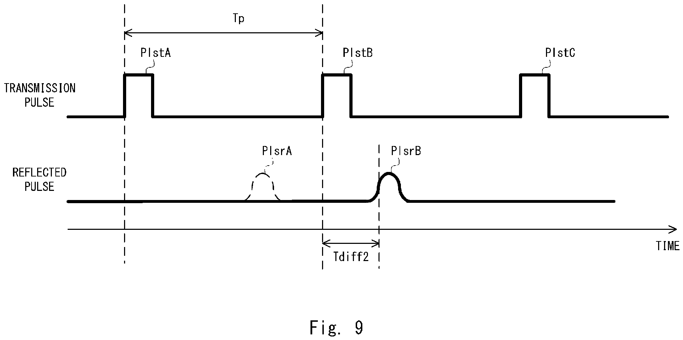

Each of Figs. 8 and 9 is a timing chart showing a relation between transmission pulses and reflected pulses according to a comparative example. In each of the examples shown in Figs. 8 and 9, it is assumed that transmission pulses PlstA, PlstB and PlstC are transmitted at a pulse period Tp. Further, it is also assumed that the transmission pulses PlstA, PlstB and PlstC have the same frequency and the same phase as each other.

Further, in the example shown in Fig. 8, it is assumed that the flight time until a transmission pulse is reflected on a distance-measurement-target object 90 and returned is longer than the pulse period Tp.

Firstly, the transmission pulse PlstA is transmitted. After that and after the transmission pulse PlstB is transmitted, a reflected pulse PlsrA, which is the transmission pulse PlstA that has been reflected on the distance-measurement-target object 90 and returned, is received. At this point, in the comparative example shown in Fig. 8, there is a possibility that a distance is measured by using a time difference Tdiff1' between the transmitting timing of the transmission pulse PlstB and the receiving timing of the reflected pulse PlsrA. When a distance is measured by using the time difference Tdiff1' as described above, the distance is incorrectly calculated.

In contrast, in the example shown in Fig. 9, it is assumed that the flight time until a transmission pulse is reflected on the distance-measurement-target object 90 and returned is shorter than the pulse period Tp. Further, it is assumed that the transmission pulse PlstA is not reflected, so that no reflected pulse PlsrA of the transmission pulse PlstA is received. Further, it is assumed that the transmission pulse PlstB is reflected on the distance-measurement-target object and its reflected pulse PlsrB is received. In this case, the distance is measured by using a time difference Tdiff2 between the transmitting timing of the transmission pulse PlstB and the receiving timing of the reflected pulse PlsrB. Although this distance measurement process is correct, it cannot be distinguished from the process shown in Fig. 8.

In order to cope with the problem shown in Figs. 8 and 9, it is conceivable to increase the pulse period when it is presumed that the distance to the distance-measurement-target object is long. In this way, it is possible to prevent the incorrect measurement of a distance like the one shown in Fig. 8. However, if the pulse period is increased, the length of time from a time at which a distance is measured to a time at which the next distance is measured is increased, so that the speed of the distance measurement may decrease. Therefore, since distances cannot be measured at a desired speed, the distance measurement cannot be performed properly. In contrast to this, the distance-measurement apparatus 100 according to the first example embodiment can measure distances without increasing the pulse period.

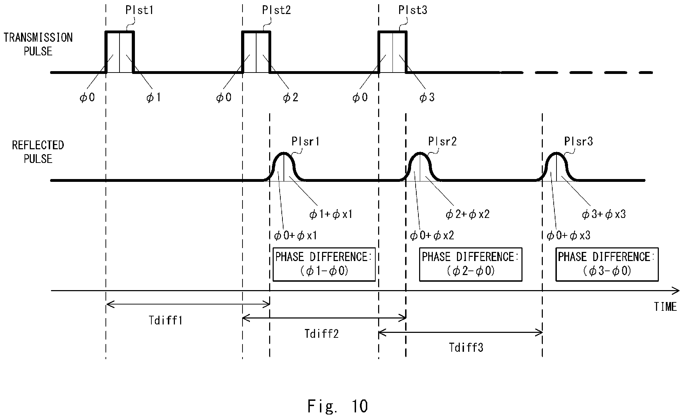

Fig. 10 is a timing chart showing a relation between transmission pulses and reflected pulses according to the first example embodiment. In the example shown in Fig. 10, it is assumed that the transmission pulses Plst1, Plst2 and Plst3 are transmitted at a pulse period Tp. Further, in the example shown in Fig. 10, it is assumed that the flight time until a transmission pulse is reflected on a distance-measurement-target object 90 and returned is longer than the pulse period Tp.

Firstly, a transmission pulse Plst1 having a phase difference $\Delta\varphi1$ (= $\varphi1$-$\varphi0$) is transmitted. At this transmitting timing, a measurement start trigger Trgt1 is output to the distance calculation unit 160. Next, a transmission pulse Plst2 having a phase difference $\Delta\varphi2$ (= $\varphi2$-$\varphi0$) is transmitted. At this transmitting timing, a measurement start trigger Trgt2 is output to the distance calculation unit 160. Next, a transmission pulse Plst3 having a phase difference $\Delta\varphi3$ (= $\varphi3$-$\varphi0$) is transmitted. At this transmitting timing, a measurement start trigger Trgt3 is output to the distance calculation unit 160.

Further, after transmitting the transmission pulse Plst3, the distance-measurement apparatus 100 may transmit a transmission pulse Plst4 having a phase difference $\Delta\varphi4$ which differs from any of the aforementioned phase differences. Alternatively, after transmitting the transmission pulse Plst3, the distance-measurement apparatus 100 may transmit the transmission pulse Plst1 again. Note that the transmission pulse Plst1 can be transmitted again after a flight time required for the round trip of an optical signal is expected to have elapsed. The same applies to the other example embodiments.

Meanwhile, after the transmission pulse Plst2 is transmitted, a reflected pulse Plsr1 is received. At this receiving timing, the frequency offset f1 is detected and the receiving timing is extracted. Further, a measurement stop trigger Trgr1 is output to the distance calculation unit 160. Note that the transmitted optical signal is attenuated due to the reflection on the distance-measurement-target object 90 and through the flight process of the optical signal. As a result, the waveform of the envelope of the reflected pulse Plsr1 is blunted as compared to the waveform of the envelop of the transmission pulse Plst1. Therefore, the reflected-pulse specifying unit 154 outputs the measurement stop trigger Trgr1 at a timing at which the optical strength of the reflected pulse Plsr1 exceeds a predetermined threshold. The same applies to the other reflected pulses such as a reflected pulse Plsr2.

Note that the phase in the region #1 of the reflected pulse Plsr1 is expressed as $\varphi0$+$\varphi$x1, and the phase in the region #2 thereof is expressed as $\varphi1$+$\varphi$x1. Note that $\varphi$x1 represents the phase noise superimposed on the reflected pulse Plsr1. As shown above, the temporal variations of the phase noise superimposed on the signal are sufficiently longer than the time corresponding to the width of the pulse, and the same phase noise $\varphi$x1 could be superimposed on each of the regions #1 and #2. Therefore, the phase difference of the reflected pulse Plsr1 is detected as $\varphi1$-$\varphi0$ (= $\Delta\varphi1$). Therefore, the reflected-pulse specifying unit 154 determines that the reflected pulse Plsr1 corresponds to the first transmission pulse Plst1 corresponding to the phase difference $\Delta\varphi1$. Accordingly, the reflected-pulse specifying unit 154 outputs a measurement stop trigger Trgr1 corresponding to the measurement start trigger Trgt1 to the distance calculation unit 160 at the receiving timing of the reflected pulse Plsr1. At this point, the distance calculation unit 160 calculates a distance to the distance-measurement-target object 90 from a time difference Tdiff1 between the measurement start trigger Trgt1 and the measurement stop trigger Trgr1.

Further, after the transmission pulse Plst3 is transmitted, a reflected pulse Plsr2 is received. At this receiving timing, the frequency offset f1 is detected and the receiving timing is extracted. Further, a measurement stop trigger Trgr2 is output to the distance calculation unit 160. Note that the phase in the region #1 of the reflected pulse Plsr2 is expressed as $\varphi0+\varphi x2$, and the phase in the region #2 thereof is expressed as $\varphi2+\varphi x2$. Note that $\varphi x2$ represents the phase noise superimposed on the reflected pulse Plsr2. As shown above, the temporal variations of the phase noises superimposed on the signal are sufficiently longer than the time corresponding to the width of the pulse, and the same phase noise $\varphi x2$ could be superimposed on each of the regions #1 and #2. Therefore, the phase difference of the reflected pulse Plsr2 is detected as $\varphi2-\varphi0$ (= $\Delta\varphi2$). Therefore, the reflected-pulse specifying unit 154 determines that the reflected pulse Plsr2 corresponds to the second transmission pulse Plst2 corresponding to the phase difference $\Delta\varphi2$. Accordingly, the reflected-pulse specifying unit 154 outputs a measurement stop trigger Trgr2 corresponding to the measurement start trigger Trgt2 to the distance calculation unit 160 at the receiving timing of the reflected pulse Plsr2. At this point, the distance calculation unit 160 calculates a distance to the distance-measurement-target object 90 from a time difference Tdiff2 between the measurement start trigger Trgt2 and the measurement stop trigger Trgr2.

Further, after the transmission pulse Plst4 (not shown) is transmitted, a reflected pulse Plsr3 is received. At this receiving timing, the frequency offset f1 is detected and the receiving timing is extracted. Further, a measurement stop trigger Trgr3 is output to the distance calculation unit 160. Note that the phase in the region #1 of the reflected pulse Plsr3 is expressed as $\varphi0+\varphi x3$, and the phase in the region #2 thereof is expressed as $\varphi3+\varphi x3$. Note that $\varphi x3$ represents the phase noise superimposed on the reflected pulse Plsr3. As shown above, the temporal variations of the phase noises superimposed on the signal are sufficiently longer than the time corresponding to the width of the pulse, and the same phase noise $\varphi x3$ could be superimposed on each of the regions #1 and #2. Therefore, the phase difference of the reflected pulse Plsr3 is detected as $\varphi3-\varphi0$ (= $\Delta\varphi3$). Therefore, the reflected-pulse specifying unit 154 determines that the reflected pulse Plsr3 corresponds to the third transmission pulse Plst3 corresponding to the phase difference $\Delta\varphi3$. Accordingly, the reflected-pulse specifying unit 154 outputs a measurement stop trigger Trgr3 corresponding to the measurement start trigger Trgt3 to the distance calculation unit 160 at the receiving timing of the reflected pulse Plsr3. At this point, the distance calculation unit 160 calculates a distance to the distance-measurement-target object 90 from a time difference Tdiff3 between the measurement start trigger Trgt3 and the measurement stop trigger Trgr3.

As described above, the distance-measurement apparatus 100 according to the first example embodiment associates a measurement start trigger signal related to a transmission pulse having a given phase difference with a measurement stop trigger signal related to a reflected pulse having this phase difference, and calculates a distance R therefrom. In other words, in the distance-measurement apparatus 100, a transmission pulse and a reflected pulse having phase differences corresponding to each other are associated with each other. In this way, the distance-measurement apparatus 100 according to the first example embodiment can properly associate a transmission pulse with a reflected pulse, which is reflected light of that transmission pulse reflected on a distance-measurement-target object 90. Therefore, it is possible to properly measure a distance to a distance-measurement-target object irrespective of the distance thereto or the transmission period of transmission pulses. Further, it is possible to distinguish transmission pulses from one another by simply changing the phase in each of regions of the transmission pulses without complicating the structure of the transmitting/receiving apparatus(es) (the transmitting-side module and the receiving-side module). Further, since optical signals are transmitted and received by using only the optical frequency f0+f1, transmission pulses can be distinguished from one another even when the frequency band is narrow.

That is, the distance-measurement apparatus 100 according to the first example embodiment can specify the ordinal position of the transmission pulse that corresponds to the received reflected pulse in the transmitting sequence by detecting the phase difference in the reflected pulse. In this way, even when the distance to the distance-measurement-target object 90 is long, it is unnecessary to increase the period at which a distance is measured. Further, even when transmission pulses are successively applied to the distance-measurement-target object 90 at a considerably short period, the reflected pulses can be distinguished from one another in the receiving-side module, so that it is possible to properly measure the distance to the distance-measurement-target object 90. Further, since it is possible to successively apply transmission pulses to the distance-measurement-target object 90 at a considerably short period, it is possible to increase the number of times of distance measurements in a unit time.

Further, the distance-measurement apparatus 100 according to the first example embodiment generates a transmission pulse in such a manner that the phases in two regions #1 and #2 of the transmission pulses can be different from each other. Then, the distance-measurement apparatus 100 according to the first example embodiment determines a transmission pulse corresponding to a reflected pulse by detecting the phase difference between the phase in the region #1 of the reflected pulse and that in the region #2 thereof. In contrast, in the case where each transmission pulse has only one phase, and transmission pulses are formed so that their phases are different from each other, there is a possibility that it is impossible to determine which transmission pulse the phase detected in a reflected pulse corresponds to because of the phase noises superimposed on the reflected pulse which are caused by phase noises and the like of the light source 108 and the light source 124 on the transmitting side. Therefore, by detecting the "phase difference" of a reflected pulse as described above, it is possible to reliably determine a transmission pulse corresponding to the reflected pulse even when phase noises are superimposed on the reflected pulse.

Further, as shown in Fig. 5, the distance-measurement apparatus 100 according to the first example embodiment generates a transmission pulse by modulating the frequency f0 of the light source in such a manner that phases in a plurality of respective regions of a modulation signal having a frequency offset f1 which is offset (i.e., shifted) from the frequency f0 are different from each other. As a result, it is possible to make one transmission pulse have regions having different phases with a simple configuration. Note that, in principle, it is also possible to perform a homodyne receiving operation by phase-modulating only the phase of the light source having the optical frequency f0 and making the phase-modulated light interfere with reference light having an optical frequency f0 without offsetting (i.e., shifting) it by the frequency offset f1. However, since various interference components of the light are down-converted and mixed at or near the DC component, it is difficult to extract only the target distance-measuring signal. Therefore, it is preferred to perform a heterodyne receiving operation by superimposing the frequency offset f1.

Further, the distance-measurement apparatus 100 according to the first example embodiment is configured to generate a plurality of transmission pulses, which are formed so that their phase differences are changed according to the transmission order of the transmission pulses by using the phase difference table, and associate reflected pulses with the transmission pulses by using the phase difference table. In this way, it is possible to immediately determine a transmission pulse that corresponds to the reflected pulse.

(Second Example Embodiment)

Next, a second example embodiment will be described. The second example embodiment differs from the first example embodiment because the phases in three regions of a transmission pulse are different from one another in the second example embodiment. Note that the components in the second example embodiment are substantially the same as those in the first example embodiment shown in Fig. 4, and therefore the descriptions thereof will be omitted as appropriate.

In the second example embodiment, it is assumed that a transmission pulse is divided into three regions, i.e., into a front region, an intermediate region, and a rear region. Note that the front region is referred to as a region #1, and the intermediate region is referred to as a region #2. Further, the rear region is referred to as a region #3. Further, it is assumed that the phases of the optical signal in the three regions, i.e., in the regions #1, #2 and #3 of a transmission pulse can be different from one another. According to the invention, the differences among these phases are changed according to the transmission order of transmission pulses. Therefore, a pair of a phase difference $\Delta\varphi a$ between the phase in the region #1 and that in the region #2 of the transmission pulse and a phase difference $\Delta\varphi b$ between the phase in the region #1 and that in the region #3 of the transmission pulse is changed according to the transmission order of transmission pulses.

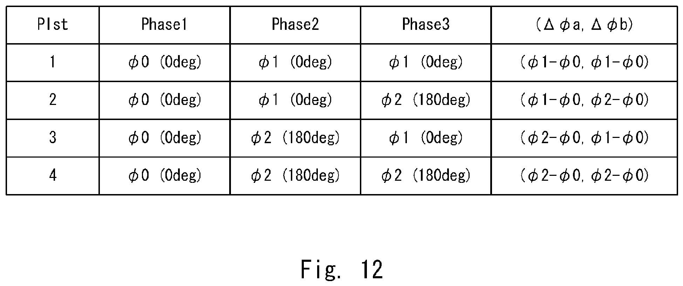

In the second example embodiment, in the phase difference table stored in the phase difference table storage unit 102, the order of transmission pulses is associated with the phases in the three respective regions as shown in Fig. 12 (which will be described later). Further, in the second example embodiment, in the phase difference table, the transmission order of transmission pulses is associated with pairs of phase differences in transmission pulses. For example, in the phase difference table, a pair of phase differences in a first transmission pulse is represented by $(\Delta\varphi a1, \Delta\varphi b1)$, and a pair of phase differences in a second transmission pulse is represented by $(\Delta\varphi a2, \Delta\varphi b2)$.

Similar to the first example embodiment, the modulation signal generation unit 104 according to the second example embodiment generates a modulation signal for generating transmission pulses by using the phase difference table stored in the phase difference table storage unit 102. Further, the modulation signal generation unit 104 outputs a measurement start trigger Trgt to the distance calculation unit 160 at a timing at which a transmission pulse corresponding to the frequency offset f1 is transmitted.

The light source 108 generates an optical signal having a reference frequency f0 as shown in Fig. 11 (which will be described later). The optical signal is input to the optical modulator 106. The optical modulator 106 generates a plurality of transmission pulses which have respective pairs of phase differences different from each other by using the modulation signal received from the modulation signal generation unit 104 and the optical signal (a modulator input signal) received from the light source 108. The optical modulator 106 outputs an optical signal including the generated transmission pulses to the optical transmission unit 120.

Fig. 11 is a diagram for explaining operations performed by the optical modulator 106 according to the second example embodiment. Further, Fig. 12 shows an example of the phase difference table according to the second example embodiment. In Fig. 11, an example of three transmission pulses is shown as in the case of Fig. 5. As shown in Fig. 11, the optical signal (the modulator input signal) input to the optical modulator 106 is an optical signal having a constant frequency f0. Further, it is assumed that each of the I signal and the Q signal, which serve as the modulation signal, has a pulse-like waveform having a frequency f1, and that the Q signal is a signal whose phase is delayed from that of the I signal by 90 degrees. Note that the amplitude of the modulation signal is 0V except for these pulse-like waveforms. Further, regarding the pulse-like waveform of two modulation signals having the frequency f1, in each transmission pulse, the phases in the region #1, #2 and #3 (i.e., in the front region, the intermediate region, and the rear region) can be different from one another. Further, the pair ($\Delta\varphi a$, $\Delta\varphi b$) of the phase difference $\Delta\varphi a$ between the phase in the region #1 and that in the region #2 and the phase difference $\Delta\varphi b$ between the region #1 and that in the region #3 is different from one transmission pulse to another.

Note that the optical modulator 106 modulates the optical signal according to the pulse-like waveform of the modulation signal, and outputs the modulated optical signal (a modulator output signal). This modulator output signal corresponds to the transmission pulse. Note that, as shown in the example in Fig. 12, in the second example embodiment, the phase in the region #1 of each transmission pulse is $\varphi 0$ ($\varphi 0$ = 0 deg). Further, the phase in the region #2 of the first pulse Plst1 is $\varphi 1$ ($\varphi 1$ = 0 deg), and the phase in the region #3 thereof is $\varphi 1$ ($\varphi 1$ = 0 deg). Further, the phase in the region #2 of the second pulse Plst2 is $\varphi 1$, and the phase in the region #3 thereof is $\varphi 2$ ($\varphi 2$ = 180 deg). Further, the phase in the region #2 of the third pulse Plst3 is $\varphi 2$, and the phase in the region #3 thereof is $\varphi 1$. Further, the phase in the region #2 of the fourth pulse Plst4 is $\varphi 2$ ($\varphi 2$ = 180 deg), and the phase in the region #3 thereof is $\varphi 2$ ($\varphi 2$ = 180 deg).

That is, in the second example embodiment, the pair of the phase in the region #2 and that in the region #3 of a transmission pulse is different from one transmission pulse to another. Therefore, pairs of phase differences are provided in such a manner that each transmission pulse has a different pair of phase differences. Note that, in the first example embodiment, in order to distinguish four transmission pulses from one another, four types of phases ($\varphi 1$, $\varphi 2$, $\varphi 3$ and $\varphi 4$) are required as the phases in the regions #2 of transmission pulses because the phases in the regions #2 are different from one transmission pulse to another. In contrast, in the second example embodiment, in order to distinguish four transmission pulses from one another, only two types of phases ($\varphi 1$ and $\varphi 2$) are required as the phases used in the regions #2 and #3 because the only requirement in the second example embodiment is that the pairs of phase differences should be different from one another.

As shown in the example in Figs. 11 and 12, in the first pulse Plst1, the phase in the region #1 is 0 degrees and that in the region #2 is 0 degrees. Further, the phase in the region #3 is 0 degrees. Therefore, the modulation signal generation unit 104 generates, as the I signal, a modulation signal in which: the phase in the region #1 is 0 degrees; the phase in the region #2 is $\varphi 1$, i.e., 0 degrees ($\varphi 1$ = 0); and the phase in the region #3 is $\varphi 1$, i.e., 0 degrees ($\varphi 1$ = 0). Further, the modulation signal generation unit 104 generates, as the Q signal, a modulation signal whose phase is delayed from that of the I signal by 90 degrees. When the optical modulator 106 receives these I and Q signals, it shifts the optical signal having the frequency f0 by a frequency f1, modulates the optical signal so that the phases in the regions #1, #2 and #3 become the same as each other, i.e., the phase difference thereamong becomes 0 degrees, and by doing so, outputs a pulse having a frequency f0+f1. As a result, the transmission pulse Plst1 in which: the phase in the region #1 is 0 degrees (Phase 1 = 0); the phase in the region #2 is 0 degrees (Phase 2 = 0); and the phase in the region #3 is 0 degrees (Phase 3 = 0) is generated. Note that the pair ($\Delta\varphi a1$, $\Delta\varphi b1$) of the phase difference $\Delta\varphi a1$ (= $\varphi 1$-$\varphi 0$) between the phase in the region #1 and that in the region #2, and the phase difference $\Delta\varphi b1$ (= $\varphi 1$-$\varphi 0$) between the region #1 and the region #3 in the transmission pulse Plst1 is expressed as (0, 0).

Further, as shown in the example in Figs. 11 and 12, in the second pulse Plst2, the phase in the region #1 is 0 degrees and the phase in the region #2 is $\varphi 1$, i.e., 0 degrees ($\varphi 1$ = 0). Further, the phase in the region #3 is $\varphi 2$, i.e., 180 degrees ($\varphi 2$ = 180). Therefore, the modulation signal generation unit 104 generates, as the I signal, a modulation signal in which: the phase in the region #1 is 0 degrees; the phase in the region #2 is 0 degrees; and the phase in the region #3 is 180 degrees. Further, the modulation signal generation unit 104 generates, as the Q signal, a modulation signal whose phase is delayed from that of the I signal by 90 degrees. When the optical modulator 106 receives these I and Q signals, it shifts the optical signal having the frequency f0 by the frequency f1, modulates the optical signal so that: the phase in the regions #1 is 0 degrees; the phase in the regions #2 is 0 degrees; and the phase in the regions #3 is 180 degrees, and by doing so, outputs a pulse having the frequency f0+f1. As a result, the transmission pulse Plst2 in which: the phase in the region #1 is 0 degrees (Phase 1 = 0); the phase in the region #2 is 0 degrees (Phase 2 = 0); and the phase in the region #3 is 180 degrees (Phase 3 = 180) is generated. Note that the pair ($\Delta\varphi a2$, $\Delta\varphi b2$) of the phase difference $\Delta\varphi a2$ (= $\varphi 1$-$\varphi 0$) and the phase difference $\Delta\varphi b2$ (= $\varphi 2$-$\varphi 0$) in the transmission pulse Plst2 is expressed as (0, 180).

Further, as shown in the example in Figs. 11 and 12, in the third pulse Plst3, the phase in the region #1 is 0 degrees and the phase in the region #2 is $\varphi 2$, i.e., 180 degrees ($\varphi 2$ = 180). Further, the phase in the region #3 is $\varphi 1$, i.e., 0 degrees ($\varphi 1$ = 0). Therefore, the modulation signal generation unit 104 generates, as the I signal, a modulation signal in which: the phase in the region #1 is 0 degrees; the phase in the region #2 is 180 degrees; and the phase in the region #3 is 0 degrees. Further, the modulation signal generation unit 104 generates, as the Q signal, a modulation signal whose phase is delayed from that of the I signal by 90 degrees. When the optical modulator 106 receives these I and Q signals, it shifts the optical signal having the frequency f0 by a frequency f1, modulates the optical signal so that: the phase in the regions #1 is 0 degrees; the phase in the regions #2 is 180 degrees; and the phase in the regions #3 is 0 degrees, and by doing so, outputs a pulse having the frequency f0+f1. As a result, the transmission pulse Plst3 in which: the phase in the region #1 is 0 degrees (Phase 1 = 0); the phase in the region #2 is 180 degrees (Phase 2 = 180); and the phase in the region #3 is 0 degrees (Phase 3 = 0) is generated. Note that the pair ($\Delta\varphi a3$, $\Delta\varphi b3$) of the phase difference $\Delta\varphi a3$ (= $\varphi2-\varphi0$) and the phase difference $\Delta\varphi b3$ (= $\varphi1-\varphi0$) in the transmission pulse Plst3 is expressed as (180, 0).

Note that although it is not shown in Fig. 11, similarly to the above-described transmission pulses, a pair ($\Delta\varphi a4$, $\Delta\varphi b4$) of the phase difference $\Delta\varphi a4$ (= $\varphi2-\varphi0$) and the phase difference $\Delta\varphi b4$ (= $\varphi2-\varphi0$) in the transmission pulse Plst4 is expressed as (180,180). As described above, the transmission pulses Plst1, Plst2, Plst3 and Plst4 have pairs of phase differences different from one another.

Note that the modulation signal generation unit 104 may output a measurement start trigger Trgt1 to the distance calculation unit 160 at a timing at which the modulation signal having the pulse-like waveform having the pair ($\Delta\varphi a1$, $\Delta\varphi b1$) of phase differences is output. The modulation signal generation unit 104 may output a measurement start trigger Trgt2 to the distance calculation unit 160 at a timing at which the modulation signal having the pulse-like waveform having the pair ($\Delta\varphi a2$, $\Delta\varphi b2$) of phase differences is output. The modulation signal generation unit 104 may output a measurement start trigger Trgt3 to the distance calculation unit 160 at a timing at which the modulation signal having the pulse-like waveform having the pair ($\Delta\varphi a3$, $\Delta\varphi b3$) of phase differences is output. The modulation signal generation unit 104 may output a measurement start trigger Trgt4 to the distance calculation unit 160 at a timing at which the modulation signal having the pulse-like waveform having the pair ($\Delta\varphi a42$, $\Delta\varphi b4$) of phase differences is output.

Similarly to the first example embodiment, the optical transmission unit 120 transmits (emits) an optical signal including a plurality of transmission pulses (Plst1, Plst2, Plst3 and Plst4) to a distance-measurement-target object 90. The transmission pulses are reflected on the distance-measurement-target object 90 and travel toward the distance-measurement apparatus 100. The optical reception unit 122 receives an optical signal including a plurality of reflected pulses reflected on the distance-measurement-target object 90. Note that the frequency of each of the plurality of received reflected pulses is a frequency f0+f1.

Further, since a plurality of transmission pulses have pairs of phase differences different from one another, a plurality of received reflected pulses are formed in such a manner that a pair of phase differences in a plurality of regions in a reflected pulse is different from one reflected pulse to another. Note that since phase noises in the light source 108 on the transmitting side and the light source 124 on the receiving side and phase noises that are caused during the round trip of the optical signal could be superimposed, the phase in each of corresponding regions of the received reflected pulse could be different from the phase in the respective region of the transmission pulse. However, since the temporal variations of these phase noises are sufficiently longer than the time corresponding to the width of one pulse and the noises that are superimposed in one pulse are considered to be constant, the phase difference in a given reflected pulse may be substantially the same as the phase difference of the corresponding transmission pulse. Therefore, a pair of phase differences in a given reflected pulse could be substantially the same as a pair of phase differences ($\Delta\varphi a$, $\Delta\varphi b$) in the corresponding transmission pulse. In other words, even if the phase noises are superimposed, the information about phase differences in a plurality of regions of a reflected pulse is maintained.

The operations performed by the optical interference unit 130, the optical/electrical conversion unit 132, and the AD converter 134 are substantially the same as those performed in the first example embodiment, and therefore the descriptions thereof are omitted. Similarly to the first example embodiment, the phase-difference detection unit 152 detects a phase difference in an electric signal which indicates a frequency f1 and corresponds to a reflected pulse.

Specifically, the phase-difference detection unit 152 calculates a phase in each of the regions in the electric signal indicating the frequency f1, which corresponds to a respective one of the regions in the transmission pulse. The phases in the regions in the transmission pulse can be different from each other. Note that, in the second example embodiment, the phases in the region #1 (the front), the region #2 (the intermediate), and the region #3 (the rear) of the transmission pulse can be different from one another. Therefore, the phase-difference detection unit 152 according to the second example embodiment calculates the phase in each of the region #1 (the front), the region #2 (the intermediate), and the region #3 (rear) of the electric signal corresponding to the reflected pulse. Then, the phase-difference detection unit 152 calculates a difference between the phase in the region #1 and that in the region #2, and thereby detects one phase difference $\Delta\varphi a$ of the corresponding reflected pulse. Similarly, the phase-difference detection unit 152 calculates a difference between the phase in the region #1 and that in the region #3, and thereby detects another phase difference $\Delta\varphi b$ of the corresponding reflected pulse. The phase-difference detection unit 152 outputs a pair ($\Delta\varphi a$, $\Delta\varphi b$) of the detected phase differences $\Delta\varphi a$ and $\Delta\varphi b$ to the reflected-pulse specifying unit 154.

The reflected-pulse specifying unit 154 specifies a transmission pulse Plst corresponding to the pair ($\Delta\varphi$a, $\Delta\varphi$b) of phase differences detected from the reflected pulse by using the phase difference table stored in the phase difference table storage unit 102. In this way, the reflected-pulse specifying unit 154 associates the reflected pulses Plsr with the transmission pulse Plst. Further, the reflected-pulse specifying unit 154 extracts the receiving timing of the reflected pulse having the pair ($\Delta\varphi$a, $\Delta\varphi$b) of detected phase differences. The reflected-pulse specifying unit 154 outputs a measurement stop trigger Trgr corresponding to the specified transmission pulse Plst to the distance calculation unit 160 at the receiving timing of the reflected pulse.

For example, when a pair ($\Delta\varphi$a1, $\Delta\varphi$b1) of phase differences is specified, the phase-difference detection unit 152 determines that the reflected pulse corresponding to this pair ($\Delta\varphi$a1, $\Delta\varphi$b1) of phase differences corresponds to the transmission pulse Plst1. Then, the phase-difference detection unit 152 outputs a measurement stop trigger Trgr1 corresponding to the transmission pulse Plst1 to the distance calculation unit 160 at the receiving timing of the reflected pulse. Similarly, when a pair of phase differences ($\Delta\varphi$a2, $\Delta\varphi$b2) is specified, the phase-difference detection unit 152 outputs a measurement stop trigger Trgr2 corresponding to the transmission pulse Plst2 to the distance calculation unit 160 at the receiving timing of the reflected pulse. Similarly, when a pair of phase differences ($\Delta\varphi$a3, $\Delta\varphi$b3) is specified, the phase-difference detection unit 152 outputs a measurement stop trigger Trgr3 corresponding to the transmission pulse Plst3 to the distance calculation unit 160 at the receiving timing of the reflected pulse. Similarly, when a pair of phase differences ($\Delta\varphi$a4, $\Delta\varphi$b4) is specified, the phase-difference detection unit 152 outputs a measurement stop trigger Trgr4 corresponding to the transmission pulse Plst4 to the distance calculation unit 160 at the receiving timing of the reflected pulse.

The distance calculation unit 160 calculates a distance R to the distance-measurement-target object 90, by using the Expression 1, from the time difference between the output timing of the measurement start trigger Trgt (a first trigger signal) and the output timing of the measurement stop trigger Trgr (a second trigger signal). Note that the distance calculation unit 160 calculates a distance R related to the transmission pulse Plst1 having the pair ($\Delta\varphi$a1, $\Delta\varphi$b1) of phase differences from the time difference between the output timing of the measurement start trigger Trgt1 and that of the measurement stop trigger Trgr1. The distance calculation unit 160 calculates a distance R related to the transmission pulse Plst2 having the pair ($\Delta\varphi$a2, $\Delta\varphi$b2) of phase differences from the time difference between the output timing of the measurement start trigger Trgt2 and that of the measurement stop trigger Trgr2. Subsequently, the distance calculation unit 160 calculates a distance R related to a transmission pulse having a pair of phase differences ($\Delta\varphi$an, $\Delta\varphi$bn) from the time difference between the output timing of a measurement start trigger Trgtn corresponding to an n-th transmission pulse and that of a measurement stop trigger Trgrn corresponding thereto.

As described above, the distance-measurement apparatus 100 according to the second example embodiment associates a measurement start trigger signal related to a transmission pulse having a given pair of phase differences with a measurement stop trigger signal related to a reflected pulse having this pair of phase differences, and calculates a distance R therefrom. In other words, in the distance-measurement apparatus 100, a transmission pulse and a reflected pulse having pairs of phase differences corresponding to each other are associated with each other. In this way, similarly to the first example embodiment, the distance-measurement apparatus 100 according to the second example embodiment can properly associate a transmission pulse with a reflected pulse, which is reflected light of that transmission pulse reflected on a distance-measurement-target object 90. Therefore, in the second example embodiment, it is also possible to properly measure a distance to a distance-measurement-target object irrespective of the distance thereto or the transmission period of transmission pulses.

Further, unlike the first example embodiment, the distance-measurement apparatus 100 according to the second example embodiment generates transmission pulses in such a manner that the phases in the three respective regions of one transmission pulse can be different from one another. Then, the distance-measurement apparatus 100 according to the second example embodiment determines a transmission pulse corresponding to a reflected pulse by detecting a pair of a phase difference between the phase in the region #1 and that in the region #2 of the reflected pulse and a phase difference between the phase in the region #1 and that in the region #3 thereof. Note that in the first example embodiment, in order to specify four transmission pulses (reflected pulses), it is necessary to use four phases (0 degrees, 90 degrees, 180 degrees, and 270 degrees). In contrast, in the second example embodiment, it is possible to specify four transmission pulses (reflected pulses) by using only two phases (0 degrees and 180 degrees).

In the first example embodiment, the minimum value (except for 0 degrees) of the phase difference between regions in one transmission pulse is 90 degrees. In contrast, in the second example embodiment, the minimum value (except for 0 degrees) of the phase difference between regions in one transmission pulse is 180 degrees. Therefore, in the second example embodiment, the minimum value of the phase difference between regions in one transmission pulse can be increased as compared to that in the first example embodiment. When the accuracy of the detection of a phase in the distance-measurement apparatus 100 (the phase-difference detection unit 152) is low, it may be impossible to detect a phase difference of 90 degrees. In such a case, in the method according to the first example embodiment, there is a possibility that a phase difference between regions in one reflected pulse cannot be properly detected, and therefore there is a possibility that a distance cannot be properly measured. In contrast, in the method according to the second example embodiment, even when a phase difference of 90 degrees cannot be detected, a phase difference between regions in one reflected pulse can be properly detected. Therefore, even when the accuracy of the detection of a phase is low, the distance-measurement apparatus 100 according to the second example embodiment can associate a reflected pulse with a transmission pulse, and therefore properly measure a distance.

Further, in the second example embodiment, in the case where a phase difference of 90 degrees can be detected, it is possible to implement 16 transmission pulses having different phase differences by adjusting the phases in three regions so that each of them is one of 0 degrees, 90 degrees, 180 degrees, and 270 degrees. Therefore, the distance-measurement apparatus 100 according to the second example embodiment can generate a large number of different transmission pulses as compared to the number of different transmission pulses in the first example embodiment.

Meanwhile, in the first example embodiment, since there are only two regions in one transmission pulse, the waveform of a pulse is less complicated than that in the second example embodiment. Therefore, the distance-measurement apparatus 100 according to the first example embodiment can easily generate transmission pulses as compared to the second example embodiment. Further, while the phase-difference detection unit 152 according to the second example embodiment needs to detect two phase differences for one reflected pulse, the phase-difference detection unit 152 according to the first example embodiment needs to detect only one phase difference for one reflected pulse. Therefore, the distance-measurement apparatus 100 according to the first example embodiment can detect a phase difference through simple processing as compared to the processing in the second example embodiment.

(Modified Example)

Note that the present invention is not limited to the above-described example embodiments, and they may be modified as appropriate without departing from the spirit and scope of the invention. For example, in the above-described example embodiments, the phase of the first region (the region #1) of a transmission pulse is 0 degrees. However, the present invention is not limited to this example. The phase in the region #1 may be any phase. Further, each transmission pulse does not need to have the same phase in the regions #1 thereof. For example, the phase in the region #1 of the transmission pulse Plst1 may be set to 0 degrees, and that in the region #1 of the transmission pulse Plst2 may be set to 180 degrees. That is, as long as the phase difference is changed from one transmission pulse to another, which region should be used as a region for the reference phase can be arbitrarily determined. Further, how much degrees the reference phase should have can also be arbitrarily determined. The same applies to the second example embodiment.

Further, in the above-described second example embodiment, the pair of the phase difference $\Delta\varphi a$ between the phase in the region #1 and that in the region #2 of a transmission pulse and the phase difference $\Delta\varphi b$ between the phase in the region #1 and that in the region #3 thereof is changed from one transmission pulse to another. However, the phase difference does not need to be a difference between the phase in the region #1 and that in another region. For example, the pair of the phase difference $\Delta\varphi a$ between the phase in the region #2 and that in the region #1 of a transmission pulse and the phase difference $\Delta\varphi b$ between the phase in the region #2 and that in the region #3 thereof may be changed from one transmission pulse to another.

Further, in the above-described second example embodiment, it is assumed that the phases in three regions of a transmission pulse can be different from one another. However, the present invention is not limited to this example. The number of regions in one transmission pulse may be four or more. That is, transmission pulses may be formed so that the phases in N respective regions (N is an integer equal to or greater than three) may be different from one another, and a phase difference between phases, i.e., a difference between the phases in the N respective regions may be changed according to the transmission order of transmission pulses. By increasing the number of regions of a transmission pulse, it is possible to associate a reflected pulse with a transmission pulse without increasing the number of types of phases to be used.

Further, the distance calculation unit 160 may take the processing time in the optical modulator 106 and the like into consideration when determining the timing at which the measurement start trigger is output. In other words, the distance calculation unit 160 may take account of the processing time from when the measurement start trigger is received to when the transmission pulse corresponding to the measurement start trigger is actually transmitted. In this case, the distance calculation unit 160 may use the timing that is obtained by adding the processing time in the optical modulator 106 and the like to the output timing of the measurement start trigger as the start timing of the distance measurement. Note that it is assumed that the processing time in the optical modulator 106 and the like is roughly constant.

Similarly, the distance calculation unit 160 may take the processing time of the optical interference unit 130 and the like until the measurement stop trigger is output into consideration when determining the measurement stop trigger. In other words, the distance calculation unit 160 may take account of the processing time from when a reflected pulse is received by the optical reception unit 122 to when a measurement stop trigger is output by the reflected-pulse specifying unit 154. In this case, the distance calculation unit 160 may use the timing that is obtained by subtracting the processing time of the optical interference unit 130 and the like from the output timing of the measurement stop trigger as the end timing of the distance measurement. Note that it is assumed that the processing time in the optical interference unit 130 and the like is roughly constant.

Alternatively, the modulation signal generation unit 104 may output a measurement start trigger indicating a time at which the transmission pulse is transmitted while taking into account of the processing time until the transmission pulse is transmitted by the optical transmission unit 120 located in the subsequent stage (i.e., located on the output side thereof). That is, when the time at which the modulation signal is generated is represented by t1 and the processing time in the optical modulator 106 and the like is represented by $\Delta t1$, the modulation signal generation unit 104 may output a measurement start trigger indicating a time (t1+$\Delta t1$). Similarly, the reflected-pulse specifying unit 154 may output a measurement stop trigger indicating a time at which a reflected pulse is received while taking account of the processing time in the optical interference unit 130 and the like located in the preceding stage (i.e., located on the input side thereof). That is, when the time at which the reflected-pulse specifying unit 154 receives a signal is represented by t2 and the processing time in the optical interference unit 130 and the like is represented by $\Delta t2$, the reflected-pulse specifying unit 154 may output a measurement stop trigger indicating a time (t2-$\Delta t2$). In this case, the distance calculation unit 160 may calculate the distance R, by using the Expression 1, according to a relation Td = (t2-$\Delta t2$)-(t1+$\Delta t1$).

In any of the above-described methods for calculating a distance R in which the processing time of each processing unit is taken into consideration, the processing time of each processing unit affects the distance R as an offset thereof. Therefore, by performing calibration based on a time difference that is obtained by measuring a known distance in advance, a distance R may be accurately calculated while taking the total processing time of all the processing units into consideration.

Note that although the example embodiment is described as a hardware configuration in the above-described example embodiments, the example embodiment is not limited to the hardware configurations. In the example embodiment, at least one processing in each circuit in the distance-measurement apparatus can also be implemented by having a CPU (Central Processing Unit) execute a computer program.

In the above-described examples, the program can be stored and provided to a computer using any type of non-transitory computer readable media. Non-transitory computer readable media include any type of tangible storage media. Examples of non-transitory computer readable media include magnetic storage media (e.g.,

floppy disks, magnetic tapes, hard disk drives, etc.), optical magnetic storage media (e.g., magneto-optical disks), CD-ROM (Read Only Memory), CD-R, CD-R/W, and semiconductor memories (e.g., mask ROM, PROM (Programmable ROM), EPROM (Erasable PROM), flash ROM, and RAM (Random Access Memory)). The program may be provided to a computer using any type of transitory computer readable media. Examples of transitory computer readable media include electric signals, optical signals, and electromagnetic waves. Transitory computer readable media can provide the program to a computer via a wired communication line such as electric wires and optical fibers or a radio communication line.

Although the present invention is explained above with reference to example embodiments, the present invention is not limited to the above-described example embodiments. Various modifications that can be understood by those skilled in the art can be made to the configuration and details of the present invention within the scope of the invention.

## Reference Signs List

| 1 | DISTANCE-MEASUREMENT APPARATUS |
|---|---|
| 2 | GENERATION UNIT |
| 4 | TRANSMISSION UNIT |
| 6 | RECEPTION UNIT |
| 8 | DETECTION UNIT |
| 10 | DISTANCE CALCULATION UNIT |
| 100 | DISTANCE-MEASUREMENT APPARATUS |
| 102 | PHASE-DIFFERENCE TABLE STORAGE UNIT |
| 104 | MODULATION SIGNAL GENERATION UNIT |
| 106 | OPTICAL MODULATOR |
| 108 | LIGHT SOURCE |
| 110 | PULSE GENERATION UNIT |
| 120 | OPTICAL TRANSMISSION UNIT |
| 122 | OPTICAL RECEPTION UNIT |
| 124 | LIGHT SOURCE |
| 130 | OPTICAL INTERFERENCE UNIT |
| 132 | OPTICAL/ELECTRICAL CONVERSION UNIT |
| 134 | AD CONVERTER |
| 152 | PHASE-DIFFERENCE DETECTION UNIT |
| 154 | REFLECTED PULSE SPECIFYING UNIT |
| 160 | DISTANCE CALCULATION UNIT |

## Claims

1. A distance-measurement apparatus (1) comprising:

generation means (2) for generating a plurality of transmission pulses of which a strength of an optical signal changes in a pulse-like manner, each pulse being divided into a plurality of regions, the plurality of transmission pulses being formed so that phases in respective regions of a transmission pulse can be different from each other, and being formed so that a phase difference between the phases in the plurality of respective regions of the transmission pulse is changed according to a transmission order of the transmission pulses;
transmission means (4) for repeatedly transmitting the generated transmission pulses;
reception means (6) for receiving reflected pulses of the transmission pulses reflected on a distance-measurement-target object (90);
detection means (8) for detecting a phase difference between phases in a plurality of respective regions of the received reflected pulse; and
distance calculation means (10) for calculating a distance to the distance-measurement-target object (90) based on a receiving timing of the received reflected pulse and a transmitting timing of the transmission pulse corresponding to the phase difference detected from the reflected pulse.

2.  The distance-measurement apparatus (1) according to Claim 1, wherein the generation means (2) is configured to generate a plurality of transmission pulses, the plurality of transmission pulses being formed so that phases in two respective regions of the transmission pulse can be different from each other, and being formed so that a phase difference between the phases in the two respective regions of the transmission pulse is changed according to a transmission order of the transmission pulses.

3.  The distance-measurement apparatus (1) according to Claim 1, wherein the generation means (2) is configured to generate a plurality of transmission pulses, the plurality of transmission pulses being formed so that phases in N respective regions, where N is equal to or greater than three, of the transmission pulse can be different from one another, and being formed so that a phase difference between the phases in the N respective regions of the transmission pulse is changed according to a transmission order of the transmission pulses.

4.  The distance-measurement apparatus (1) according to any one of Claims 1 to 3, wherein the generation means (2) generates the transmission pulses by modulating an optical signal having a reference frequency so that phases in a plurality of respective regions of a modulation signal having a frequency offset from the reference frequency can be different from one another.

5.  The distance-measurement apparatus (1) according to any one of Claims 1 to 4, wherein

    the generation means (2) generates the plurality of transmission pulses by using a phase difference table in which the transmission order of the transmission pulses is associated with the phase differences thereof, and
the distance calculation means (10) calculates a distance to the distance-measurement-target object based on a receiving timing of the reflected pulse and a transmitting timing of the transmission pulse associated with the reflected pulse by using the phase difference table.

6.  A distance-measurement method comprising:

    generating a plurality of transmission pulses of which a strength of an optical signal changes in a pulse-like manner, each pulse being divided into a plurality of regions, the plurality of transmission pulses being formed so that phases in respective regions of a transmission pulse can be different from each other, and being formed so that a phase difference between the phases in the plurality of respective regions of the transmission pulse is changed according to a transmission order of the transmission pulses;
    repeatedly transmitting the generated transmission pulses;
    receiving reflected pulses of the transmission pulses reflected on a distance-measurement-target object (90);
    detecting a phase difference between phases in a plurality of respective regions of the received reflected pulse; and
    calculating a distance to the distance-measurement-target object (90) based on a receiving timing of the received reflected pulse and a transmitting timing of the transmission pulse corresponding to the phase difference detected from the reflected pulse.

7.  The distance-measurement method according to Claim 6, wherein a plurality of transmission pulses are generated in such a manner that the plurality of transmission pulses are formed so that phases in two respective regions of the transmission pulse can be different from each other, and being formed so that a phase difference between the phases in the two respective regions of the transmission pulse is changed according to a transmission order of the transmission pulses.

8.  The distance-measurement method according to Claim 6, wherein a plurality of transmission pulses are generated in such a manner that the plurality of transmission pulses are formed so that phases in N respective regions, where N is equal to or greater than three, of the transmission pulse can be different from one another, and being formed so that a phase difference between the phases in the N respective regions of the transmission pulse is changed according to a transmission order of the transmission pulses.

9. The distance-measurement method according to any one of Claims 6 to 8, wherein the transmission pulses are generated by modulating an optical signal having a reference frequency so that phases in a plurality of respective regions of a modulation signal having a frequency offset from the reference frequency can be different from one another.

10. The distance-measurement method according to any one of Claims 6 to 9, wherein

the plurality of transmission pulses are generated by using a phase difference table in which the transmission order of the transmission pulses is associated with the phase differences thereof, and

a distance to the distance-measurement-target object is calculated based on a receiving timing of the reflected pulse and a transmitting timing of the transmission pulse associated with the reflected pulse by using the phase difference table.

**Patentansprüche**

1. Entfernungsmesseinrichtung (1), aufweisend:

Erzeugungsmittel (2) zum Erzeugen mehrerer Übertragungsimpulse, bei denen sich eine Stärke eines optischen Signals impulsartig ändert, wobei jeder Impuls in mehrere Bereiche unterteilt ist, wobei die mehreren Übertragungsimpulse so ausgebildet sind, dass Phasen in jeweiligen Bereichen eines Übertragungsimpulses voneinander verschieden sein können, und so ausgebildet sind, dass eine Phasendifferenz zwischen den Phasen in den mehreren jeweiligen Bereichen des Übertragungsimpulses gemäß einer Übertragungsreihenfolge der Übertragungsimpulse geändert wird; Übertragungsmittel (4) zum wiederholten Übertragen der erzeugten Übertragungsimpulse; Empfangsmittel (6) zum Empfangen reflektierter Impulse der Übertragungsimpulse, die an einem Entfernungsmessungs-Zielobjekt (90) reflektiert werden; Detektionsmittel (8) zum Detektieren einer Phasendifferenz zwischen Phasen in mehreren jeweiligen Bereichen des empfangenen reflektierten Impulses; und Entfernungsberechnungsmittel (10) zum Berechnen einer Entfernung zu dem Entfernungsmessungs-Zielobjekt (90) basierend auf einem Empfangszeitpunkt des empfangenen reflektierten Impulses und einem Übertragungszeitpunkt des Übertragungsimpulses entsprechend der aus dem reflektierten Impuls detektierten Phasendifferenz.

2. Entfernungsmesseinrichtung (1) nach Anspruch 1, wobei das Erzeugungsmittel (2) konfiguriert ist, um mehrere Übertragungsimpulse zu erzeugen, wobei die mehreren Übertragungsimpulse so ausgebildet sind, dass Phasen in zwei jeweiligen Bereichen des Übertragungsimpulses voneinander verschieden sein können, und so ausgebildet sind, dass eine Phasendifferenz zwischen den Phasen in den zwei jeweiligen Bereichen des Übertragungsimpulses gemäß einer Übertragungsreihenfolge der Übertragungsimpulse geändert wird.

3. Entfernungsmesseinrichtung (1) nach Anspruch 1, wobei das Erzeugungsmittel (2) konfiguriert ist, um mehrere Übertragungsimpulse zu erzeugen, wobei die mehreren Übertragungsimpulse so ausgebildet sind, dass Phasen in N jeweiligen Bereichen, wobei N größer als oder gleich drei ist, des Übertragungsimpulses voneinander verschieden sein können, und so ausgebildet sind, dass eine Phasendifferenz zwischen den Phasen in den N jeweiligen Bereichen des Übertragungsimpulses gemäß einer Übertragungsreihenfolge der Übertragungsimpulse geändert wird.

4. Entfernungsmesseinrichtung (1) nach einem der Ansprüche 1 bis 3, wobei das Erzeugungsmittel (2) die Übertragungsimpulse durch Modulieren eines optischen Signals, das eine Referenzfrequenz aufweist, so erzeugt, dass Phasen in mehreren jeweiligen Bereichen eines Modulationssignals, die einen Frequenzversatz aufweisen, von der Referenzfrequenz voneinander verschieden sein können.

5. Entfernungsmesseinrichtung (1) nach einem der Ansprüche 1 bis 4, wobei

das Erzeugungsmittel (2) die mehreren Übertragungsimpulse durch Verwenden einer Phasendifferenztabelle erzeugt, in der die Übertragungsreihenfolge der Übertragungsimpulse mit deren Phasendifferenzen verknüpft ist, und das Entfernungsberechnungsmittel (10) eine Entfernung zu dem Entfernungsmessungs-Zielobjekt berechnet, basierend auf einem Empfangszeitpunkt des reflektierten Impulses und einem Sendezeitpunkt des mit dem reflektierten Impuls verknüpften Sendeimpulses durch Verwenden der Phasendifferenztabelle.

6. Entfernungsmessverfahren, aufweisend:

Erzeugen mehrerer Übertragungsimpulse, bei denen sich eine Stärke eines optischen Signals impulsartig ändert, wobei jeder Impuls in mehrere Bereiche unterteilt ist, wobei die mehreren Übertragungsimpulse so ausgebildet sind, dass Phasen in jeweiligen Bereichen eines Übertragungsimpulses voneinander verschieden sein können, und so ausgebildet sind, dass eine Phasendifferenz zwischen den Phasen in den mehreren jeweiligen Bereichen des Übertragungsimpulses gemäß einer Übertragungsreihenfolge der Übertragungsimpulse geändert wird;

wiederholtes Übertragen der erzeugten Übertragungsimpulse;

Empfangen reflektierter Impulse der an einem Entfernungsmessungs-Zielobjekt (90) reflektierten Übertragungsimpulse;

Erfassen einer Phasendifferenz zwischen Phasen in mehreren jeweiligen Bereichen des empfangenen reflektierten Impulses; und

Berechnen einer Entfernung zu dem Entfernungsmessungs-Zielobjekt (90) basierend auf einem Empfangszeitpunkt des empfangenen reflektierten Impulses und einem Sendezeitpunkt des Sendeimpulses entsprechend der aus dem reflektierten Impuls erfassten Phasendifferenz.

7. Entfernungsmessverfahren nach Anspruch 6, wobei mehrere Übertragungsimpulse derart erzeugt werden, dass die mehreren Übertragungsimpulse so ausgebildet werden, dass Phasen in zwei jeweiligen Bereichen des Übertragungsimpulses voneinander verschieden sein können, und so ausgebildet werden, dass eine Phasendifferenz zwischen den Phasen in den zwei jeweiligen Bereichen des Übertragungsimpulses gemäß einer Übertragungsreihenfolge der Übertragungsimpulse geändert wird.

8. Entfernungsmessverfahren nach Anspruch 6, wobei mehrere Übertragungsimpulse derart erzeugt werden, dass die mehreren Übertragungsimpulse so ausgebildet werden, dass Phasen in N jeweiligen Bereichen, wobei N größer als oder gleich drei ist, des Übertragungsimpulses voneinander verschieden sein können, und so ausgebildet werden, dass eine Phasendifferenz zwischen den Phasen in den N jeweiligen Bereichen des Übertragungsimpulses gemäß einer Übertragungsreihenfolge der Übertragungsimpulse geändert wird.

9. Entfernungsmessverfahren nach einem der Ansprüche 6 bis 8, wobei die Übertragungsimpulse durch Modulieren eines optischen Signals, das eine Referenzfrequenz aufweist, so erzeugt werden, dass Phasen in mehreren jeweiligen Bereichen eines Modulationssignals, die einen Frequenzversatz aufweisen, von der Referenzfrequenz voneinander verschieden sein können.

10. Entfernungsmessverfahren nach einem der Ansprüche 6 bis 9, wobei

die mehreren Übertragungsimpulse durch Verwenden einer Phasendifferenztabelle erzeugt werden, in der die Übertragungsreihenfolge der Übertragungsimpulse mit deren Phasendifferenzen verknüpft ist, und
eine Entfernung zu dem Entfernungsmessungs-Zielobjekt basierend auf einem Empfangszeitpunkt des reflektierten Impulses und einem Sendezeitpunkt des mit dem reflektierten Impuls verknüpften Sendeimpulses durch Verwenden der Phasendifferenztabelle berechnet wird.

## Revendications

1. Appareil de mesure de distance (1) comprenant :

un moyen de génération (2) permettant de générer une pluralité d'impulsions de transmission dont une intensité d'un signal optique change d'une manière semblable à une impulsion, chaque impulsion étant divisée en une pluralité de régions, la pluralité d'impulsions de transmission étant formées de sorte que des phases dans des régions respectives d'une impulsion de transmission peuvent être différentes les unes des autres, et étant formées de sorte qu'une différence de phase entre les phases dans la pluralité de régions respectives de l'impulsion de transmission change selon un ordre de transmission des impulsions de transmission ;
un moyen de transmission (4) permettant de transmettre de manière répétée les impulsions de transmission générées ;
un moyen de réception (6) permettant de recevoir des impulsions réfléchies des impulsions de transmission réfléchies sur un objet cible de mesure de distance (90) ;
un moyen de détection (8) permettant de détecter une différence de phase entre des phases dans une pluralité de régions respectives de l'impulsion réfléchie reçue ; et
un moyen de calcul de distance (10) permettant de calculer une distance par rapport à l'objet cible de mesure de distance (90) sur la base d'un moment de réception de l'impulsion réfléchie reçue et d'un moment de transmission de l'impulsion de transmission correspondant à la différence de phase détectée à partir de l'impulsion réfléchie.

**2.** Appareil de mesure de distance (1) selon la revendication 1, dans lequel le moyen de génération (2) est configuré pour générer une pluralité d'impulsions de transmission, la pluralité d'impulsions de transmission étant formées de sorte que des phases dans deux régions respectives de l'impulsion de transmission peuvent être différentes l'une de l'autre, et étant formées de sorte qu'une différence de phase entre les phases dans les deux régions respectives de l'impulsion de transmission change selon un ordre de transmission des impulsions de transmission.

**3.** Appareil de mesure de distance (1) selon la revendication 1, dans lequel le moyen de génération (2) est configuré pour générer une pluralité d'impulsions de transmission, la pluralité d'impulsions de transmission étant formées de sorte que des phases dans N régions respectives, où N est égal ou supérieur à trois, de l'impulsion de transmission peuvent être différentes les unes des autres, et étant formées de sorte qu'une différence de phase entre les phases dans les N régions respectives de l'impulsion de transmission change selon un ordre de transmission des impulsions de transmission.

**4.** Appareil de mesure de distance (1) selon l'une quelconque des revendications 1 à 3, dans lequel le moyen de génération (2) génère les impulsions de transmission en modulant un signal optique ayant une fréquence de référence de sorte que des phases dans une pluralité de régions respectives d'un signal de modulation ayant une fréquence décalée par rapport à la fréquence de référence peuvent être différentes les unes des autres.

**5.** Appareil de mesure de distance (1) selon l'une quelconque des revendications 1 à 4, dans lequel

le moyen de génération (2) génère la pluralité d'impulsions de transmission en utilisant une table de différences de phase dans laquelle l'ordre de transmission des impulsions de transmission est associé aux différences de phase de celles-ci, et
le moyen de calcul de distance (10) calcule une distance par rapport à l'objet cible de mesure de distance sur la base d'un moment de réception de l'impulsion réfléchie et d'un moment de transmission de l'impulsion de transmission associée à l'impulsion réfléchie en utilisant la table de différences de phase.

**6.** Procédé de mesure de distance comprenant :

la génération d'une pluralité d'impulsions de transmission dont une intensité d'un signal optique change d'une manière semblable à une impulsion, chaque impulsion étant divisée en une pluralité de régions, la pluralité d'impulsions de transmission étant formées de sorte que des phases dans des régions respectives d'une impulsion de transmission peuvent être différentes les unes des autres, et étant formées de sorte qu'une différence de phase entre les phases dans la pluralité de régions respectives de l'impulsion de transmission change selon un ordre de transmission des impulsions de transmission ;
la transmission répétée des impulsions de transmission générées ;
la réception d'impulsions réfléchies des impulsions de transmission réfléchies sur un objet cible de mesure de distance (90) ;
la détection d'une différence de phase entre des phases dans une pluralité de régions respectives de l'impulsion réfléchie reçue ; et
le calcul d'une distance par rapport à l'objet cible de mesure de distance (90) sur la base d'un moment de réception de l'impulsion réfléchie reçue et d'un moment de transmission de l'impulsion de transmission correspondant à la différence de phase détectée à partir de l'impulsion réfléchie.

**7.** Procédé de mesure de distance selon la revendication 6, dans lequel une pluralité d'impulsions de transmission sont générées de telle manière que la pluralité d'impulsions de transmission sont formées de sorte que des phases dans deux régions respectives de l'impulsion de transmission peuvent être différentes l'une de l'autre, et étant formées de sorte qu'une différence de phase entre les phases dans les deux régions respectives de l'impulsion de transmission change selon un ordre de transmission des impulsions de transmission.

**8.** Procédé de mesure de distance selon la revendication 6, dans lequel une pluralité d'impulsions de transmission sont générées de telle manière que la pluralité d'impulsions de transmission sont formées de sorte que les phases dans N régions respectives, où N est égal ou supérieur à trois, de l'impulsion de transmission peuvent être différentes les unes des autres, et étant formées de sorte qu'une différence de phase entre les phases dans les N régions respectives de l'impulsion de transmission change selon un ordre de transmission des impulsions de transmission.

**9.** Procédé de mesure de distance selon l'une quelconque des revendications 6 à 8, dans lequel les impulsions de transmission sont générées en modulant un signal optique ayant une fréquence de référence de sorte que des phases dans une pluralité de régions respectives d'un signal de modulation ayant un décalage de fréquence par rapport à la fréquence de référence peuvent être différentes les unes des autres.

10. Procédé de mesure de distance selon l'une quelconque des revendications 6 à 9, dans lequel

   la pluralité d'impulsions de transmission sont générées en utilisant une table de différences de phase dans laquelle l'ordre de transmission des impulsions de transmission est associé aux différences de phase de celles-ci, et
   une distance par rapport à l'objet cible de mesure de distance est calculée sur la base d'un moment de réception de l'impulsion réfléchie et d'un moment de transmission de l'impulsion de transmission associée à l'impulsion réfléchie en utilisant la table de différences de phase.

Fig. 1

S12 ── GENERATE TRANSMISSION PULSES OF WHICH
PHASE DIFFERENCES ARE DIFFERENT FROM ONE
TRANSMISSION PULSE TO ANOTHER

S14 ── TRANSMIT TRANSMISSION PULSES

S16 ── RECEIVE REFLECTED PULSES

S18 ── DETECT PHASE DIFFERENCE OF
REFLECTED PULSE

S20 ── MEASURE DISTANCE TO DISTANCE-MEASUREMENT
TARGET OBJECT

Fig. 2

Fig. 3

Fig. 4

Fig. 5

| Plst | Phase1 | Phase2 |
|------|--------|--------|
| 1 | $\phi 0$ (0deg) | $\phi 1$ (0deg) |
| 2 | $\phi 0$ (0deg) | $\phi 2$ (90deg) |
| 3 | $\phi 0$ (0deg) | $\phi 3$ (180deg) |
| 4 | $\phi 0$ (0deg) | $\phi 4$ (270deg) |

Fig. 6

S102 — GENERATE TRANSMISSION PULSE HAVING PHASE DIFFERENCE THAT IS CHANGED ACCORDING TO TRANSMISSION ORDER

S104 — TRANSMIT TRANSMISSION PULSES

S106 — RECEIVE REFLECTED PULSES

S108 — DETECT FREQUENCY OFFSET OF REFLECTED PULSE

S110 — DETECT PHASE DIFFERENCE OF REFLECTED PULSE

S112 — OUTPUT MEASUREMENT STOP TRIGGER

S114 — MEASURE DISTANCE TO DISTANCE-MEASUREMENT TARGET OBJECT

Fig. 7

TRANSMISSION
PULSE

REFLECTED
PULSE

Tp

PlstA

PlstB

PlstC

PlsrA

Tdiff1'

TIME

Fig. 8

Fig. 9

Fig. 10

Fig. 11

| Plst | Phase1 | Phase2 | Phase3 | ($\Delta\phi$a, $\Delta\phi$b) |
|------|--------|--------|--------|---------|
| 1 | $\phi$0 (0deg) | $\phi$1 (0deg) | $\phi$1 (0deg) | ($\phi$1−$\phi$0, $\phi$1−$\phi$0) |
| 2 | $\phi$0 (0deg) | $\phi$1 (0deg) | $\phi$2 (180deg) | ($\phi$1−$\phi$0, $\phi$2−$\phi$0) |
| 3 | $\phi$0 (0deg) | $\phi$2 (180deg) | $\phi$1 (0deg) | ($\phi$2−$\phi$0, $\phi$1−$\phi$0) |
| 4 | $\phi$0 (0deg) | $\phi$2 (180deg) | $\phi$2 (180deg) | ($\phi$2−$\phi$0, $\phi$2−$\phi$0) |

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013010913 A1
- US 2018224547 A1
- US 20170329010 A1

**Non-patent literature cited in the description**

- **O'CONNOR SHAWN et al.** Waveform design considerations for modulated pulse lidar. *Proc. SPIE 9111*, 05 June 2014